# EUROPEAN PATENT SPECIFICATION

(11) **EP 3 439 072 B1**
(45) Date of publication and mention of the grant of the patent: **12.04.2023**
(21) Application number: 18187124.5
(22) Date of filing: 02.08.2018
(51) Int. Cl.: H01M 4/38, H01M 4/40, H01M 10/0562, H01M 10/052, H01M 10/058, H01L 21/268

(54) **SOLID ELECTROLYTE, METHOD OF PREPARING THE SAME, AND LITHIUM BATTERY INCLUDING THE SOLID ELECTROLYTE**
FESTSTOFFELEKTROLYT, VERFAHREN ZUR HERSTELLUNG DAVON UND LITHIUMBATTERIE MIT DEM FESTSTOFFELEKTROLYT
ÉLECTROLYTE SOLIDE, PROCÉDÉ DE PRÉPARATION DE L'ÉLECTROLYTE ET PILE AU LITHIUM COMPRENANT L'ÉLECTROLYTE SOLIDE

(30) Priority: 04.08.2017 KR 20170099079; 01.08.2018 KR 20180090059
(43) Date of publication of application: 06.02.2019
(73) Proprietor: Samsung Electronics Co., Ltd., Gyeonggi-do 16677 (KR); Corning Incorporated, Corning, New York 14831 (US)
(72) Inventor: KIM, Jusik, Gyeonggi-do, 16678 (KR); MICHAEL, Edward Badding, Corning, 14831 (US); KIM, Hyunseok, Gyeonggi-do, 16678 (KR); SONG, Zhen, Corning, 14831 (US); YU, Taehwan, Gyeonggi-do, 16678 (KR)
(74) Representative: Elkington and Fife LLP

(56) References cited:
- JP-B2- 5 772 533
- US-A1- 2015 180 001
- KATO TAKEHISA ET AL: "In-situ Li7La3Zr2O12/LiCoO2 interface modification for advanced all-solid-state battery", JOURNAL OF POWER SOURCES, vol. 260, 20 March 2014 (2014-03-20), pages 292-298, XP028847756, ISSN: 0378-7753, DOI: 10.1016/J.JPOWSOUR.2014.02.102

## Description

### FIELD OF THE INVENTION

The present disclosure relates to a solid electrolyte, a method of preparing the same, and a lithium battery including the solid electrolyte.

### BACKGROUND OF THE INVENTION

A solid electrolyte used in a lithium metal battery should have excellent ionic conductivity, be thermally stable, and be able to suppress a side reaction between an electrode and a solid electrolyte. Thus a solid electrolyte which is chemically and electro-chemically with respect to the electrode is desirable. Thus there remains a need for an improved solid electrolyte.

Document JP5772533B2 discloses a solid state lithium-ion battery comprising a solid electrolyte layer consisting of two layers, the first one comprises crystalline lithium aluminium germanium phosphate (LAGP) layer and the second one an amorphous LiPON layer. Document "in-situ Li7La3Zr2O12/LiCoO2 interface modification for advanced all-solid-state battery" published on 20.03.2014 by Kato et al. on J. Power Sources, vol. 260, p. 292-298 discloses a solid state battery having a LLZO garnet solid electrolyte, a LiCoO₂ positive electrode and an amorphous layer of Nb or Li-Nb-O positioned between said electrolyte and said positive electrode.

A lithium-lanthanum-zirconium oxide-based solid electrolyte does not, without further modification, have sufficient ionic conductivity due to high interfacial resistance with a lithium metal negative electrode. Also, and while not wanting to be bound by theory, it is understood that penetration of lithium dendrites-occurs at a grain boundary of the lithium-lanthanum-zirconium oxide-based film when a lithium metal battery is driven with a high current density. A solid electrolyte with improved ionic conductivity and resistant dendrite formation is needed.

### SUMMARY OF THE INVENTION

Provided are a solid electrolyte as defined in claim 1 and a method of preparing the same as defined in claim 11.

Provided is a lithium battery including the solid electrolyte.

Additional aspects will be set forth in part in the description which follows and, in part, will be apparent from the description, or may be learned by practice of the presented embodiments.

According to an aspect, a solid electrolyte includes: a lithium ion inorganic conductive layer; and an amorphous phase on a surface of the lithium ion inorganic conductive layer, wherein the amorphous phase includes an irradiation product of the lithium ion inorganic conductive layer.

According to an aspect, a lithium battery includes a negative electrode; a positive electrode; and the solid electrolyte.

According to an aspect, a method of preparing a solid electrolyte includes: providing a lithium ion inorganic conductive layer; and irradiating the lithium ion inorganic conductive layer with a laser beam to form an amorphous phase on a surface of the lithium ion inorganic conductive layer to prepare the solid electrolyte.

According to an aspect, a solid electrolyte includes: a lithium ion conductive layer including a lithium ion conductive garnet; and an amorphous lithium-lanthanum-zirconium oxide (LLZO) on a surface of the lithium ion conductive layer.

### BRIEF DESCRIPTION OF THE DRAWINGS

These and other aspects will become apparent and more readily appreciated from the following description of the embodiments, taken in conjunction with the accompanying drawings in which:
FIG. 1 is a schematic view illustrating a structure of an embodiment of a lithium battery including an electrolyte for a lithium metal battery;
FIG. 2A is a schematic view illustrating a surface of an embodiment of the electrolyte for a lithium metal battery;
FIGS. 2B and 2C are each a schematic view illustrating a cross section of an embodiment of the electrolyte for a lithium metal battery;
FIGS. 2D and 2E are each a schematic view illustrating a crystal state of an embodiment of the electrolyte for a lithium metal battery;
FIGS. 3A to 3C are scanning electron microscope (SEM) images showing the results of SEM analysis of solid electrolyte prepared according to Example 4;
FIGS. 4A to 4C are SEM images of a solid electrolyte prepared according to Example 5;
FIG. 4D is an SEM image showing analysis results of a solid electrolyte prepared according to Example 4;
FIGS. 5A to 5C show the results of transmission electron microscopy and energy dispersive X-ray (TEM/EDX) analysis of a solid electrolyte prepared according to Example 4, in which FIGS. 5B and 5C each include a graph of intensity (arbitrary units, a.u.) versus energy (electron volts, eV) and a table providing the results of elemental analysis by energy dispersive spectroscopy (EDS);
FIGS. 6A to 6D are transmission electron microscope (TEM) images showing the results of TEM analysis of a solid electrolyte prepared according to Example 4;
FIGS. 7A and 7B are each a graph of electrode potential (Volts vs Li/Li⁺) versus time (hours) showing results of an electrochemical performance test of a lithium symmetric cell prepared according to Example 14 and Comparative Example 4;
FIG. 8 is a schematic view illustrating a structure of an embodiment of a lithium metal battery;
FIGS. 9A and 9B are each a graph of imaginary impedance (Ωcm²) versus real impedance (Ωcm²) showing interfacial resistance characteristics of lithium metal batteries prepared according to Example 9 and Comparative Example 3, respectively;
FIGS. 10A and 10B are each a graph of electrode potential (Volts vs Li/Li⁺) versus capacity (milliampere hours per square centimeter, mAh·cm²) showing capacity-dependent electrode potential changes of a lithium metal battery prepared according to Example 9 and a lithium metal battery prepared according to Comparative Example 3, respectively;
FIG. 11 is a graph of capacity (mAh·cm⁻²) and efficiency (percent) versus cycle number showing capacity changes and efficiency characteristics of a lithium metal battery prepared according to Example 9;

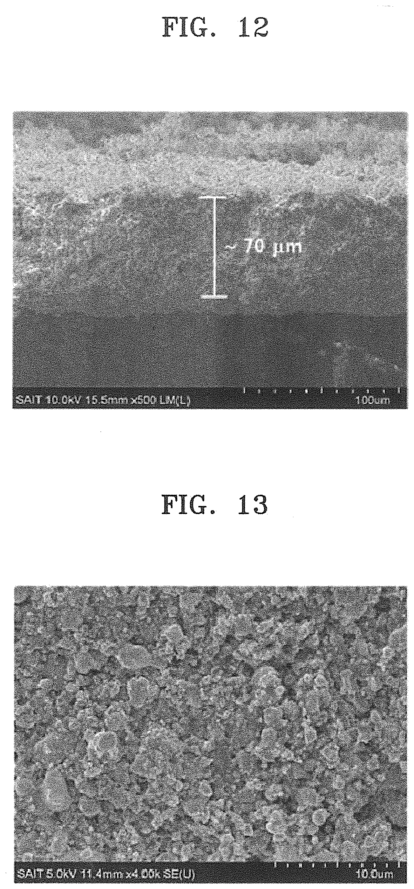

FIG. 12 is a TEM image of a solid electrolyte prepared according to Comparative Example 2;
FIG. 13 is a SEM image of a solid electrolyte prepared according to Comparative Example 2;
FIG. 14 is a graph of electrode potential (volts vs Li/Li⁺) versus capacity (mAh·cm⁻²) showing capacity-dependent electrode potential changes of a lithium metal battery prepared according to Example 15;
FIG. 15 s a graph of capacity (mAh·cm⁻²) and efficiency (percent) versus cycle number showing capacity changes and efficiency characteristics of a lithium metal battery prepared according to Example 15;
Fig. 16 shows the fractured cross-sectional SEM image of a fractured pellets; and
Fig. 17 shows a cross sectional SEM image of a fired lithium-lanthanum-zirconium oxide (LLZO) tape having a thickness of about 60 micrometers.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain various aspects. Expressions such as "at least one of," when preceding a list of elements, modify the entire list of elements and do not modify the individual elements of the list. Also, "at least one" does not exclude like elements not named.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third," etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, "a first element," "component," "region," "layer," or "section" discussed below could be termed a second element, component, region, layer, or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "At least one" is not to be construed as limiting "a" or "an." "or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

A C rate means a current which will discharge a battery in one hour, e.g., a C rate for a battery having a discharge capacity of 1.6 ampere-hours would be 1.6 amperes.

Hereinafter, a solid electrolyte for a lithium battery according to claim 1, a method of preparing the solid electrolyte according to claim 11, and a lithium battery including the solid electrolyte will be described in further detail.

According to an embodiment of the present disclosure, there is provided a solid electrolyte comprising a lithium ion inorganic conductive layer; and an amorphous phase on a surface of the lithium ion inorganic conductive layer. The amorphous phase comprises an irradiation product of the lithium ion inorganic conductive layer. In an embodiment the amorphous phase consists of an irradiation product of the lithium ion inorganic conductive layer. The amorphous phase may be in a form of an amorphous film, and the amorphous film may have a thickness of about 5 nanometers (nm) to about 5 micrometers (µm), about 10 nm to about 1 µm, or about 20 nm to about 500 nm. The solid electrolyte may further comprise a semi-crystalline film comprising a semi-crystalline phase, and the semi-crystalline film may be situated between the lithium ion inorganic conductive layer and the amorphous film. Also, the solid electrolyte may further comprise a crystalline phase situated between the semi-crystalline film and the amorphous film. The crystalline phase may be in the form of a crystalline film.

In an embodiment, the amorphous phase may be in a form of a patterned amorphous film. As such, when a pattern is formed on a surface of the amorphous film to prepare a patterned amorphous film, the patterned amorphous film may have a surface area which is about 200 to about 500 percent (%) greater than a surface area of the lithium ion inorganic conductive layer, e.g., the lithium ion inorganic conductive layer beneath the patterned amorphous film. When a surface area of the solid electrolyte increases, an activation area between the solid electrolyte and a lithium metal negative electrode accordingly increases, thereby reducing interfacial resistance between the solid electrolyte and the lithium metal negative electrode. Thus, when a solid electrolyte is disposed to be adjacent to at least one of a negative electrode and a positive electrode, the effect of reducing interfacial resistance between the solid electrolyte and the at least one of a negative electrode and a positive electrode can be obtained. In an embodiment, the patterned amorphous film has a surface area which is about 250 to about 450%, or about 300 to about 400% greater than a surface area of the lithium ion inorganic conductive layer.

As an example of a solid electrolyte used in a lithium battery, a lithium-lanthanum-zirconium oxide-based film may be used. However, when the lithium-lanthanum-zirconium oxide-based film is used as a solid electrolyte, interfacial resistance between the solid electrolyte and a lithium metal negative electrode increases so that the solid electrolyte may not have sufficient ion conductivity. In particular, when a lithium metal battery is driven with a high current density, lithium ions may penetrate the grain boundary of the solid electrolyte and grow therein, to cause a short circuit of the lithium battery.

In this regard, the inventors of the present disclosure have studied and found that an amorphous film may be disposed on a side of a lithium ion inorganic conductive layer constituting a solid electrolyte to provide a solid electrolyte in which penetration of lithium ions into the grain boundary of the lithium-lanthanum-zirconium oxide-based film and growth of lithium ions therein are suppressed. The amorphous film may be disposed on both sides of the lithium ion inorganic conductive layer. In an embodiment, the amorphous film of the solid electrolyte may be disposed to be adjacent to at least one of a positive electrode and a negative electrode during manufacture of a lithium metal battery. In addition, the amorphous film may be formed in the shape of a pattern.

As described above, when the lithium ion inorganic conductive layer includes an amorphous phase on a surface thereof, the effect of removing the grain boundary from the surface of the solid electrolyte may be obtained. In addition, as the growth of lithium metal or propagation of lithium ions into the solid electrolyte is suppressed, a short circuit caused by lithium metal may be prevented during a charge/discharge process.

When the solid electrolyte according to an embodiment is used, the interfacial resistance between the solid electrolyte and lithium metal is reduced, resulting in improved rate performance of a battery including the solid electrolyte. Also, because the occurrence of a short circuit caused by lithium is suppressed, the lithium battery has an improved lifespan.

The amorphous phase may be formed by irradiating a laser beam onto the lithium ion inorganic conductive layer. When the lithium ion inorganic conductive layer is irradiated with a laser beam, an amorphous phase may be formed on a surface of the lithium ion inorganic conductive layer and a surface of the amorphous phase may be physically etched. The amorphous phase may be in the form on an amorphous film on the lithium ion inorganic conductive layer.

Without further modification, lithium-lanthanum-zirconium oxide (LLZO) surfaces are unstable in ambient atmosphere and can form a resistive layer of lithium carbonate on the surface, and the lithium carbonate can degrade cell performance (see e.g., Cheng, et al., Phys. Chem. Chem. Phys., 2014, 16, 18294). While not wanting to be bound by theory, it is understood that in addition to physically etching the surface, laser treatment beneficially removes the lithium carbonate resistive layer.

The lithium ion inorganic conductive layer of the solid electrolyte according to an embodiment can be formed in a way that the grain boundary is formed to a minimum.

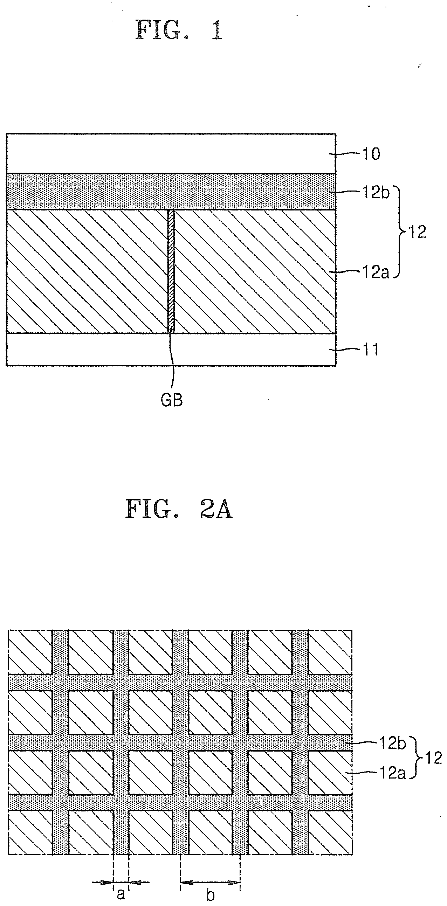

FIG. 1 is a schematic view illustrating a structure of an embodiment of a lithium battery including a solid electrolyte. The lithium battery may be a lithium metal battery using a lithium metal negative electrode.

Referring to FIG. 1, a solid electrolyte 12 is disposed on a positive electrode 11, and a lithium metal negative electrode 10 is disposed on the solid electrolyte 12. The solid electrolyte 12 includes a lithium ion inorganic conductive layer 12a and an amorphous film 12b that is disposed on a side of the lithium ion inorganic conductive layer 12a. The amorphous film 12b is disposed to be adjacent to the lithium metal negative electrode 10. The amorphous film comprises the amorphous phase. In FIG. 1, the amorphous film 12b is formed only on one side of the solid electrolyte, but in an embodiment the amorphous film 12b may be formed on both sides of the solid electrolyte 12.

As shown in FIGS. 2A to 2C, the amorphous film 12b may be formed in the shape of a pattern on the lithium ion inorganic conductive layer 12a. A portion of or an entirely of the amorphous film 12b may be in the shape of a pattern. In FIG. 1, GB refers to grain boundary of the lithium ion inorganic conductive layer 12a.

The pattern is not particularly limited to any size and shape, and any suitable pattern may be used as long as a pattern may increase a surface area of the solid electrolyte and effectively suppress the volume expansion after operation of a lithium battery including the solid electrolyte. In this regard, a pattern may have a regular or irregular shape.

As non-limiting examples of the shape of the pattern according to an embodiment, the pattern may comprise at least one of a plurality of perpendicular lines and a plurality of parallel lines [e.g., grid]. For example, the plurality of perpendicular lines may be a line type, and the plurality of parallel lines may be a mesh type (shown in FIG. 2A).

The pattern has an area of from 1 to 900 cm². The perpendicular or parallel lines may have a line width of about 1 micrometer (µm) to about 1000 µm, about 5 µm to about 500 µm, or about 10 to about 30 µm.

Referring to FIG. 2A, a line width and a pattern width b indicate a pattern size and a pattern width. The line width varies depending on the size of laser beam. The pattern size may be, for example, in a range of about 10 µm to about 10,000 µm, and the pattern width b indicates a pattern cycle or a pattern interval, and for example, may be in a range of about 1 µm to about 150 µm, about 1 µm to about 50 µm, or about 10 µm to about 30 µm. When the line width a and the pattern width b are within the ranges above, a surface area of the solid electrolyte increases so that the interfacial resistance between the solid electrolyte and at least one of a positive electrode and a negative electrode may be effectively decreased and the propagation of lithium ions into the grain boundary of the solid electrolyte and the growth of the lithium ions therein may be suppressed, thereby effectively preventing growth of dendrites.

The size and width of the pattern are influenced by the size of laser beam or the like.

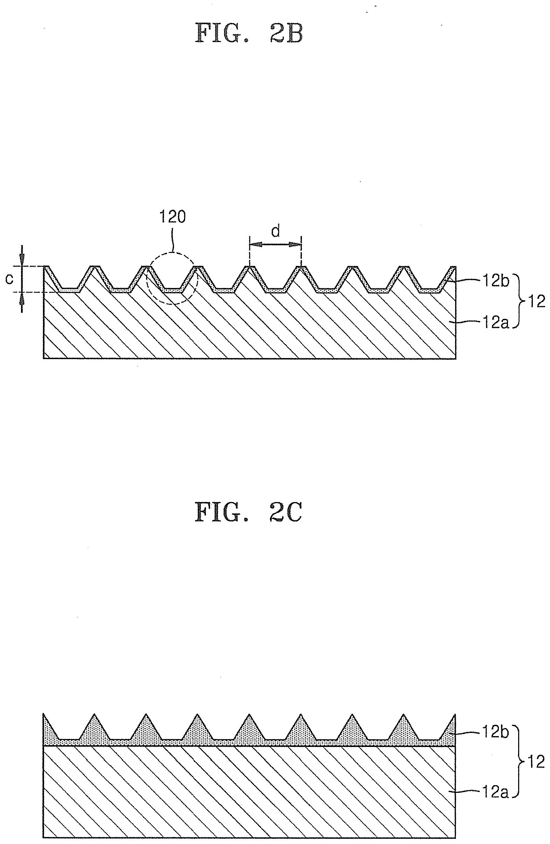

Referring to FIG. 2B, it is confirmed that the pattern may be formed over the entire amorphous film 12b present on the surface of the lithium ion inorganic conductive layer 12a. In an embodiment, referring to FIG. 2C, it is confirmed that the pattern may be formed locally only on the surface of the amorphous film 12b.

As shown in FIG. 2B, the pattern may be formed to comprise a plurality of linear grooves 120, wherein the grooves 120 may have different ranges and depths depending on laser processing conditions. In an embodiment, a depth c of a groove may be in a range from about 0.1 µm to about 20 µm, about 0.5 µm to about 15 µm, or about 1 µm to about 10 µm, and a width d of the grooves may be about 1 µm to about 200 µm, about 10 µm to about 150 µm, about 20 µm to about 100 µm.

The amorphous film may include a plurality of grooves and a protrusion between the plurality of grooves, wherein the plurality of grooves are spaced apart, on a portion of the lithium ion inorganic conductive layer. A bottom of the plurality of grooves may be a flat surface, or a curved surface having a radius of curvature.

The plurality of grooves may be periodically disposed.

In an embodiment, a surface area of the solid electrolyte in which a pattern is disposed on the surface of the amorphous film may be increased by about 200% to about 500%, for example, about 300% to about 450%, or about 350% to about 400%, as compared to a surface area of the solid electrolyte in which a pattern is not disposed on the surface of the amorphous film. In an embodiment, the surface area of the amorphous film may be about 35 cm²/cm³ to about 1×10⁶ cm²/cm³, about 50 cm²/cm³ to about 1×10⁵ cm²/cm³, or about 100 cm²/cm³ to about 1×10⁴ cm²/cm³. When the solid electrolyte having such surface area characteristics is used, an activation area between the solid electrolyte and at least one of a positive electrode and a negative electrode also increases, and thus a lithium battery having improved rate performance may be manufactured. In the solid electrolyte according to an embodiment, at least one of a ceramic layer, a ceramic glass layer, or both may be formed on the unpatterned surface of the lithium ion inorganic conductive layer. The ceramic layer may be a crystalline film comprising a crystalline phase, and the ceramic glass layer may be a semi-crystalline film comprising a semi-crystalline phase.

The term "a semi-crystalline film" means a mixed phase including a crystalline phase and an amorphous phase, and t includes, for example, a glass-ceramic.

In the solid electrolyte according to an embodiment, the amorphous film may have a reduced number of grain boundaries.

In the solid electrolyte according to an embodiment, a semi-crystalline film can be further included between the lithium ion inorganic conductive layer and the amorphous film. The semi-crystalline film may be formed using a melt quenching method, and the semi-crystalline film may be formed to have a thickness which is less than that of the amorphous film.

A crystalline film can be further included between the semi-crystalline film and the amorphous film. The crystalline film between the semi-crystalline film and the amorphous film may be the same or different from a crystalline film of the lithium ion inorganic conductive layer. For example, the lithium ion inorganic conductive layer may be a first crystalline film, and the crystalline film between the semi-crystalline film and the amorphous film may be a second crystalline film.

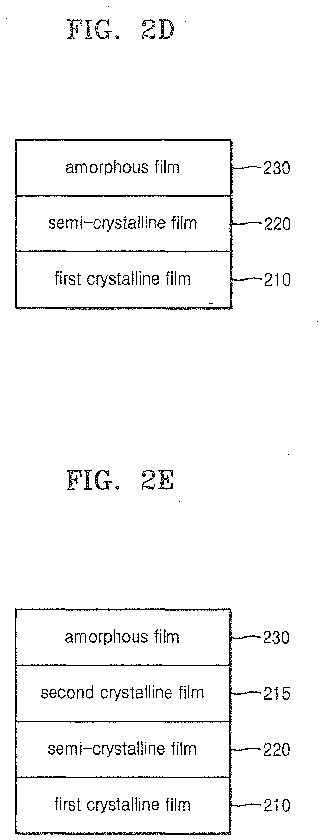

FIGS. 2D and 2E are each are a schematic view illustrating a crystal state of the solid electrolyte according to an embodiment. Referring to FIG. 2D, the solid electrolyte according to an embodiment may have a structure in which a first crystalline film 210, a semi-crystalline film 220, and an amorphous film 230 are sequentially disposed in this stated order. Referring to FIG. 2E, the solid electrolyte according to an embodiment may have a structure in which a first crystalline film 210, a semi-crystalline film 220, a second crystalline film215, and an amorphous film 230 are sequentially disposed in this stated order.

In the solid electrolyte, the presence of the amorphous film, the semi-crystalline film, and the crystalline film may be identified by transmission electron microscopy/selected area electron diffraction ("TEM/SAED"). For example, through TEM/SAED analysis, when the lithium ion inorganic conductive layer of the solid electrolyte is a lithium-lanthanum-zirconium oxide ("LLZO")-based film, such as Li₇La₃Zr_{1.7}W_{0.3}O₁₂, the formation of the amorphous phase in the solid electrolyte may be identified. That is, the presence of the semi-crystalline film between the amorphous phase and the crystalline phase may be confirmed. In addition, a crystalline structure of the LLZO-based film, i.e., a garnet structure, may be identified. Using TEM/SAED analysis, a ratio of the crystalline film, the amorphous film, and the semi-crystalline film may be directly and/or indirectly identified.

A thickness of the amorphous film may be, for example, in a range of about 5 nm to about 5 µm, about 50 nm to about 5 µm, about 50 nm to about 300 nm, or about 5 nm to about 100 nm. A thickness of the semi-crystalline film may be less than that of the amorphous film, and for example, may be in a range of about 2 nm to about 3 µm, about 3 nm to about 2 µm, or about 3 nm to about 50 nm.

In an embodiment, a thickness ratio of the amorphous film to the semi-crystalline film may be in a range of about 1:0.2 to about 1:0.8.

In an embodiment, when a thickness of the amorphous film is about 200 nm, the semi-crystalline film may be configured to have a thickness in a range of, for example, about 100 nm to about 150 nm. In an embodiment, when a thickness of the amorphous film is about 2 µm, the semi-crystalline film may be configured to have a thickness of 1 µm or less.

In polymer electrolyte according to an embodiment, a crystallinity of the lithium ion inorganic conductive layer gradually increases in a direction away from the amorphous film. The thickness of the amorphous film is less than that of an additional amorphous film, and the thickness of the amorphous film may be, for example, about 5 nm to about 5 micrometers (µm), about 10 nm to about 1 µm, or about 20 nm to about 500 nm.

An ion conductivity at 60°C of the solid electrolyte is in a range of about 5×10⁻⁴ Siemens per centimeter (Scm⁻¹) or greater.

The lithium ion inorganic conductive layer may include at least one compound of a garnet compound, an argyrodite compound, a lithium super ionic conductor ("LISICON"), a sodium super ionic conductor ("NASICON"), lithium nitride, lithium hydride, perovskite, and lithium halide.

The lithium ion inorganic conductive layer may include, for example, at least one of a Li-garnet-based ceramic, such as Li₃₊ₓLa₃M₂O₁₂ wherein 0≤x≤5 and M is tellurium (Te), niobium (Nb), or zirconium (Zr), a doped garnet-based ceramic, such as Li₃₊ₓLa₃M₂O₁₂ (wherein 0≤x≤5 and M is Te, Nb, or Zr), Li_{1+x+y}AlₓTi₂₋ₓSi_{y}P_{3-y}O₁₂ (wherein 0<x<2 and 0≤y<3), BaTiO₃, Pb(ZrₓTi₁₋ₓ)O₃ wherein 0≤x≤1 (PZT), Pb₁₋ₓLaₓZr_{1-y}Ti_{y}O₃ (PLZT) (wherein 0≤x<1 and 0≤y<1), Pb(Mg_{1/3}Nb_{2/3})O₃-PbTiO₃(PMN-PT), lithium phosphate (Li₃PO₄), lithium titanium phosphate (LiₓTi_{y}(PO₄)₃) (wherein 0<x<2 and 0<y<3), lithium aluminum titanium phosphate (LiₓAl_{y}Ti_{z}(PO₄)₃) (wherein 0<x<2, 0<y<1, and 0<z<3), Li_{1+x+y}(AlₐGa₁₋ₐ)ₓ(Ti_{b}Ge_{1-b})₂₋ₓSi_{y}P_{3-y}O₁₂ (where 0≤x≤1, 0≤y≤1, 0≤a≤1, 0≤b≤1), lithium lanthanum titanate (LiₓLa_{y}TiO₃) (wherein 0<x<2 and 0<y<3), lithium germanium thiophosphate (LiₓGe_{y}P_{z}S_{w}) (wherein 0<x<4, 0<y<1, 0<z<1, and 0<w<5), lithium nitride (LiₓN_{y}) (wherein 0<x<4 and 0<y<2), a SiS₂ glass (LiₓSi_{y}S_{z}) (wherein 0≤x<3, 0<y<2, and 0<z<4), a P₂S₅ glass (LiₓP_{y}S_{z}) (wherein 0≤x<3, 0<y<3, and 0<z<7), Li₃ₓLa_{2/3-x}TiO₃ (wherein 0^x^1/6), Li_{1+y}Al_{y}Ti_{2-y}(PO₄)₃ (wherein 0≦y≦1), Li_{1+z}Al_{z}Ge_{2-z}(PO₄)₃ (wherein 0≦z≦1), Li₂O, LiF, LiOH, Li₂CO₃, LiAlO₂, a Li₂O-Al₂O₃-SiO₂-P₂O₅-TiO₂-GeO₂ ceramic, Li₇La₃Zr₂O₁₂, Li₁₀GeP₂S₁₂, Li_{3.25}Ge_{0.25}P_{0.75}S₄, Li₃PS₄, Li₆PS₅Br, Li₆PS₅Cl, Li₇PS₅, Li₆PS₅I, Li_{1.3}Al_{0.3}Ti_{1.7}(PO₄)₃, LiTi₂(PO₄)₃, LiGe₂(PO₄)₃ LiHf₂(PO₄)₃, LiZr₂(PO₄)₃, Li₂NH₂, Li₃(NH₂)₂I, LiBH₄, LiAlH₄, LiNH₂, Li_{0.34}La_{0.51}TiO_{2.94}, LiSr₂Ti₂NbO₉, Li_{0.06}La_{0.66}Ti_{0.93}Al_{0.03}O₃, Li_{0.34}Nd_{0.55}TiO₃, Li₂CdCl₄, Li₂MgCl₄, Li₂ZnI₄, and Li₂CdI₄.

The lithium ion inorganic conductive layer can be, for example, a compound represented by the Formula 1 or 1a.
Formula 1 Li₇₋ₓM¹ₓLa₃₋ₐM²ₐZr_{2-b}M³_{b}O₁₂

Formula 1a Li₇₋ₓLa₃₋ₐM²ₐZr_{2-b}M³_{b}O₁₂

wherein, in Formula 1, M¹ comprises at least one of gallium (Ga) and aluminum (Al),
in Formulas 1 and 1a, M² comprises at least one of calcium (Ca), strontium (Sr), cesium (Cs), and barium (Ba),
M³ includes at least one of aluminum (Al), tungsten (W), niobium (Nb), and tantalum (Ta), and
0≤x<3, 0≤a≤3, and 0≤b<2.

In Formula 1, x may be from 0.01 to 2.1, for example, 0.01 to 0.99, for example, from 0.1 to 0.9, and from 0.2 to 0.8. In Formula 1, a may be from 0.1 to 2.8, for example, 0.5 to 2.75, and b may be from 0.1 to 1, for example, 0.25 to 0.5.

The compound represented by Formula 1 may be, for example, at least one of Li₇La₃Zr_{1.7}W_{0.3}O₁₂, Li_{4.9}La_{2.5}Ca_{0.5}Zr_{1.7}Nb_{0.3}O₁₂, Li_{4.9}Ga_{0.5+δ}La₃Zr_{1.7}W_{0.3}O₁₂ wherein 0≤δ≤2.5, Li_{6.4}La₃Zr_{1.7}W_{0.3}O₁₂, Li₇La₃Zr_{1.5}W_{0.5}O₁₂, Li₇La_{2.75}Ca_{0.25}Zr_{1.75}Nb_{0.25}O₁₂, Li₇La₃Zr_{1.5}Nb_{0.5}O₁₂, Li₇La₃Zr_{1.5}Ta_{0.5}O₁₂, Li_{6.272}La₃Zr_{1.7}W_{0.3}O₁₂, or Li_{5.39}Ga_{0.5+δ}La₃Zr_{1.7}W_{0.3}O₁₂(0≤δ≤1.11),.

In the compound represented by the Formula 1, a dopant may be at least one of M¹, M², and M³. In the compound represented by the Formula 1a, a dopant may be at least one of M² and M³.

An amount of the dopant in the amorphous film can be reduced to be equal or less than about 50%, for example, equal to or less than about 30% or equal to or less than about 10%, or about 0.1 to about 50%, or about 1 to about 40%, of an amount of a dopant in an amorphous film obtained by heat treatment only.

In an embodiment, a total amount of a dopant in the amorphous film can be less than a total amount of a dopant in the crystalline film. In an embodiment, a difference between a total amount of a dopant in the crystalline film and a total amount of a dopant in the amorphous film can be, for example, at least about 0.5 atom% or more, for example, about 1 atom% or more, or at least about 2 atom% to about 3 atom%, or about 0.5 atom% to about 3 atom%.

In an embodiment, an amount of a dopant in the amorphous film can be about 30 mole percent (mol%) or less, for example, about 5 mol% or less, about 0.1 mol% or less, about 0.05 mol% or less, or about 0.01 mol% to about 30 mol%, or about 0.1 mol% to about 10 mol%, based on a total content of the amorphous film.

In an embodiment, the surface chemistry can be intentionally modified by addition of a chemical component to enhance the formation of the amorphous surface layer during laser treatment. The addition of, for example, boron oxide to the surface, can promote formation of an amorphous layer on the LLZO surface.

In the solid electrolyte, a semi-crystalline film is further included between the crystalline film and the amorphous film. In the compound represented by the Formulas 1 and 1a, a dopant may be at least one of M¹, M², and M³. In the compound represented by the Formula 1a, a dopant may be at least one of M² and M³.

An amount of the dopant in the amorphous film can be reduced compared with an amount of a dopant in the crystalline film. A lithium ion inorganic conductor of the lithium ion inorganic conductive layer includes a mixture of a first phase compound, which is a major component satisfying the stoichiometric composition, and a second phase compound, which is a minor component. The amount of the dopant may be equal to or less than about 1 mol%, based on 100 mol% of the amorphous film.

In an embodiment in which the lithium ion inorganic conductor includes the compound represented by Formula 1 as the first phase compound, and the compound represented by Formula 1a as the second phase compound, the amount of the second phase compound may be about 0.1 to about 10 parts by weight, for example, about 0.5 to about 5 parts by weight, based on 100 parts by weight of the first phase compound and the second phase compound.

The amorphous film is a product obtained by irradiating laser beam onto the lithium ion inorganic conductive layer in a patterning process. In addition, a thickness of the amorphous film may be in a range of about 50 nm to about 5 µm, for example, about 10 nm to about 500 nm. In addition, the lithium ion inorganic conductive layer may be a crystalline film including a crystal grain boundary, and a thickness ratio of the lithium ion inorganic conductive layer to the amorphous film may be in a range of about 1:0.001 to about 1:0.2, for example, about 1:0.002 to about 1:0.1, and for example, may be 1:0.004.

The lithium ion inorganic conductive layer according to an embodiment may include doped LLZO. In the lithium ion inorganic conductive layer, LLZO grains may serve as a crystalline film and an amount of a dopant of the doped LLZO is relatively high at the crystal grain boundary.

The solid electrolyte may have an ion conductivity of about 1×10⁻⁷ Scm⁻¹ to about 5×10⁻³ Scm⁻¹, for example, about 1×10⁻⁴ Scm⁻¹ to about 1×10⁻³ Scm⁻¹. In addition, the solid electrolyte may be a liquid-impermeable dense layer having a porosity of about 30% or less. The porosity of the solid electrolyte may be, for example, about 25% or less, about 22% or less, about 10% or less, about 5% or less, or about 1% or less, or a porosity of about 0.1% to about 25%, or about 0.1% to about 0.5%.

The term "porosity" is the ratio of the area occupied by the pores to the total area. The porosity can be obtained by observing the cross section through scanning electron microscope(SEM) analysis or BET method. Porosity can be evaluated, for example, by using an image of a scanning electron microscope in which a solid electrolyte cross section is photographed.

A thickness of the solid electrolyte may be in a range of about 1 µm to about 300µm, for example, about 2 µm to about 100 µm or about 30 µm to about 60 µm.

Hereinafter, a method of preparing the solid electrolyte for the lithium battery will be described in detail.

The solid electrolyte may be prepared by a method including: performing a step of forming a lithium ion inorganic conductive layer; and performing a step of disposing an amorphous film on at least one side of the lithium ion inorganic conductive layer by irradiating a laser beam onto the lithium ion inorganic conductive layer.

In an embodiment, the laser beam may be irradiated such that a surface area of the lithium ion inorganic conductive layer after performing the irradiation of the laser beam in the second step is increased by about 10% to about 1,000%, for example, about 10% to about 500% as compared to a surface area of the lithium ion inorganic conductive layer before performing the irradiation of the laser beam in the second step, thereby forming a pattern on the lithium ion inorganic conductive layer.

The forming of the lithium ion inorganic conductive layer may further include: pressing inorganic lithium ion conductor powder to produce a film-type product; and performing heat treatment on the film-type product. The heat treatment may be performed at a temperature in a range of about 700°C to about 1,500°C.

According to the conditions described above, the lithium ion inorganic conductive layer with a decreased or minimized grain boundary may be prepared.

After inorganic lithium ion conductor powder is used to provide the film-type product, heat treatment may be performed thereon. As such, when the inorganic lithium ion conductor powder is heat treated, changes in a composition of a lithium ion conductor that constitutes a film may be suppressed during the film manufacturing process.

In an embodiment, the step of forming a lithium ion inorganic conductive layer may be performed by subjecting the inorganic lithium ion conductor powder to a hot press process at a temperature of about 700°C to about 1,500°C.

In an embodiment, the step of forming a lithium ion inorganic conductive layer may be performed by casting a composition including the inorganic lithium ion conductor powder, a solvent, a plasticizer, a binder, and a dispersing agent and then heating the resulting product at a temperature of about 25°C to about 1,200°C.

For example, the solvent may be at least one of any suitable alcohol or glycol, such as ethanol, butanol, and propylene glycol. The plasticizer may be for example dibutyl phthalate, and the binder may for example polyvinyl butyral. Also, as the dispersing agent, an alkylammonium salt solution of polycarboxylic acid may be used, which is available under the trade name Anti-terra 202 (Palmer Holland).

During the irradiation of the laser beam, the laser beam used herein may be, for example, an ultraviolet ("UV")-laser. A soft etching process is performed with a laser beam having a power in a range of about 0.5 watts (W) to about 15 W, for example, about 0.7 W to about 1 W, a wavelength in a range of about 300 nm to about 3,000 nm, and a frequency in a range of about 100 kilohertz (kHz) to about 1,000 kHz, for example, 57 Hz. In addition, the laser beam used herein may have a size in a range of about 10 µm to about 10,000 µm, for example, about 20 µm to about 50 µm or about 30 µm. Here, the term "a size of the laser beam" denotes a diameter of the laser beam. In addition, the laser beam used herein may have a laser pulse repetition rate in a range of about 1 kHz to about 100 kHz, or a laser pulse repetition rate of about 70 kHz.

During the irradiation of the laser beam, a gas medium or a solid-state medium may be used. For use as a gas medium, a helium-neon (He-Ne) laser, a carbon dioxide (CO₂) laser, an argon (Ar) laser, or an excimer laser may be selected. For use as a solid-state medium, neodymium-doped yttrium aluminum garnet ("Nd:YAG"), Neodymium-doped yttrium orthovanadate ("Nd:YVO₄"), or ytterbium fiber may be selected.

When a laser beam is used, line widths of the laser beam may be formed in various sizes depending on the wavelength of the laser beam. For example, a line width of a pattern may reach a minimum line level that may be directly patterned by a laser beam. In addition, depending on a laser device, the minimum line width may be sub-micrometers and the maximum line width may be in a range of several hundred micrometers. In addition, when output energy of the laser beam is controlled, the shape of the pattern may be controlled without limitation. When the laser beam is used, a pattern may be formed by partially using a diffractive optical element or a mask to control the shape of the beam in favor of the pattern.

After a pattern is formed on the surface of the amorphous film by the irradiation with the laser described above, a separate washing and air-blowing process may be additionally performed thereon.

When the solid electrolyte is Li_{6.4}La₃Zr_{1.7}W_{0.3}O₁₂ ("LLZO"), as described above, a temperature at the surface of the solid electrolyte is instantaneously raised upon application of the laser thereto and then maintained at 25°C. According to such surface quenching effects, the LLZO on the surface of the amorphous film may undergo structural changes from a cubic crystal structure to an amorphous crystal structure. When a pattern space has a same size as or is smaller than a laser spot size, the entire surface of the solid electrolyte may be treated with the laser beam. According to the actual TEM image of the cross section of the laser-treated LLZO, it is confirmed that the amorphous film is formed on the surface of the LLZO. Such an amorphous film formed on the surface does not have any grain boundary, which is highly reactive with lithium metal, so that the propagation and growth of lithium ions in the solid electrolyte may be suppressed. In addition, using EDX analysis on the solid electrolyte, it is confirmed that a dopant mainly present on grain boundary of the inorganic solid electrolyte is observed in a relatively small amount at a laser-treated part. Thus, when the LLZO film of which a surface is treated with laser is applied as a solid electrolyte for a lithium metal battery, a lithium metal battery may be operated for a long period of time without a short circuit.

According to an aspect, a lithium battery includes: a negative electrode; a positive electrode, and the solid electrolyte.

The negative electrode may be for example lithium metal negative electrode including lithium metal or an alloy of lithium metal. The lithium battery using the lithium metal negative electrode may be a lithium metal battery. The negative electrode may contain a negative electrode active material suitable for use in a lithium battery.

The lithium battery may be all solid battery.

Hereinafter, a lithium metal battery using a lithium metal negative electrode as the negative electrode will be described.

The amorphous film of the solid electrolyte may be disposed to be adjacent to the lithium metal negative electrode or the positive electrode. In an embodiment, the amorphous film of the solid electrolyte may be, for example, disposed to be adjacent to the lithium metal negative electrode.

The lithium metal battery may further include an interlayer between the lithium metal negative electrode and the solid electrolyte. The interlayer may serve to increase adhesion between the lithium metal negative electrode and the solid electrolyte, or may serve to protect the lithium metal negative electrode. A thickness of the interlayer may be in a range of about 1 µm to about 10 µm, for example, about 1 µm to about 2 µm.

The interlayer may include at least one of polyethylene oxide, gold (Au), aluminum oxide (Al₂O₃), lithium aluminate (LiAlO₂), zinc (Zn), silicon (Si), and lithium phosphate.

The lithium metal battery according to an embodiment may further include a protective layer of the lithium metal negative electrode. Any suitable material may be used as the lithium protective layer of the lithium metal negative electrode, and an example thereof includes a poly(oxyethylene methacrylate) ("POEM") film.

When the lithium metal negative electrode protective film is a POEM film, a combination use with a poly(ethylene oxide) ("PEO") film as an interlayer may be advantageous in reducing the interfacial resistance between the solid electrolyte and the lithium metal negative electrode.

The interfacial resistance between the lithium metal negative electrode and the solid electrolyte may be in a range of about 10 ohm-square centimeters (Ω cm²) to about 500 Ω cm², for example, about 50 Ω cm² to about 100 Ω cm².

The solid electrolyte according to an embodiment may be utilized as an anolyte of a hybrid electrolyte. The hybrid electrolyte refers to a dual-structured electrolyte in which a liquid (or gel) electrolyte is used for a positive electrode electrolyte and a solid electrolyte is used for a negative electrode electrolyte.

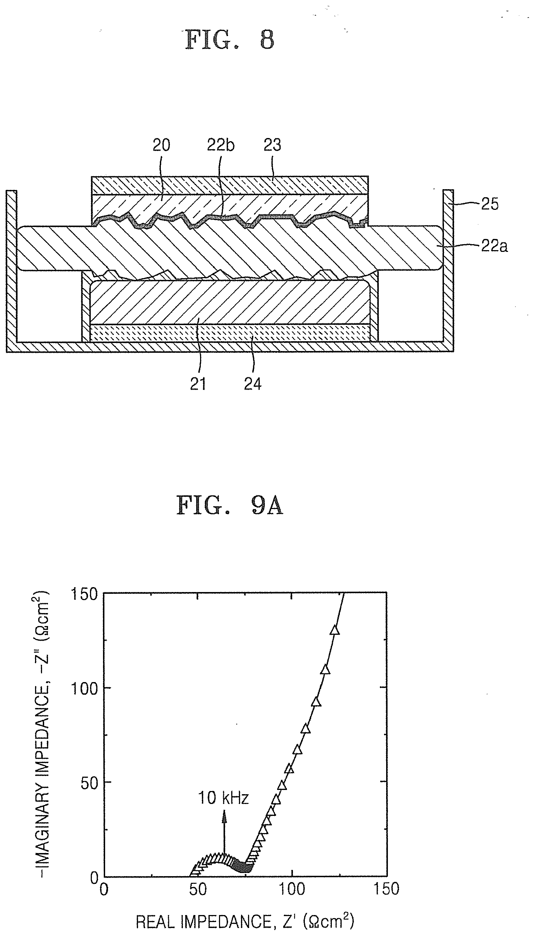

FIG. 8 is a schematic view illustrating a structure of a lithium metal battery according to an embodiment.

Referring to FIG. 8, a positive active material layer 21 is stacked on a positive current collector 24 to form a positive electrode, and a solid electrolyte 22a having a structure in which a pattern is formed on each of the both sides thereof is stacked on the positive electrode. In addition, a lithium metal negative electrode 20 and a copper current collector 23 are stacked on the solid electrolyte 22a.

In addition, an interlayer 22b is disposed between the solid electrolyte 22a and the lithium metal negative electrode 20, thereby allowing satisfactory adhesion between the solid electrolyte 22a and the lithium metal negative electrode 20. In addition, as shown in FIG. 8, a space between the positive electrode and the solid electrolyte 22a may be filled with an ionic liquid catholyte ("IL catholyte"). Reference number 25 refers to a battery case.

The interlayer 22b can be, for example, a PEO film or an Au film.

The IL catholyte can include, for example, at least one of an ionic liquid, a polymer-ionic liquid, a lithium salt, and an organic solvent.

The ionic liquid can be any suitable ionic liquid.

The ionic liquid which can be added to the IL catholyte refers to a salt in a liquid state at 25°C or a fused salt at 25°C that consists of only ions having a melting point equal to or below 25°C. The ionic liquid may be at least one of compounds each including i) a cation of at least one of ammonium cation, a pyrrolidinium cation, a pyridinium cation, a pyrimidinium cation, an imidazolium cation, a piperidinum cation, a pyrazolium cation, an oxazolium cation, a pyridazinium cation, a phosphonium cation, a sulfonium cation, a triazolium cation, and mixtures thereof, and ii) at least one anion of BF₄⁻, PF₆⁻, AsF₆⁻, SbF₆⁻, AlCl₄⁻, HSO₄⁻, ClO4⁻, CH₃SO₃⁻, CF₃CO₂⁻, Cl⁻, Br⁻, I⁻, SO₄²⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

In an embodiment, the ionic liquid may be at least one of N-methyl-N-propylpyrrolidinium bis(trifluoromethylsulfonyl)imide, N-butyl-N-methyl-pyrrolidinium bis(trifluoromethylsulfonyl)imide, 1-butyl-3-methyl-imidazolium bis(trifluoromethylsulfonyl)imide, and 1-ethyl-3-methyl-imidazolium bis(trifluoromethylsulfonyl)imide.

The polymeric ionic liquid which may be added to the IL catholyte may be, for example, a polymerization product of ionic liquid monomers, or a polymeric compound. The polymer ionic liquid is highly dissoluble in an organic solvent, and thus may further improve the ion conductivity of polymer layer when further added to the protective layer-forming composition.

When the polymeric ionic liquid is prepared by polymerization of ionic liquid monomers as described above, a resulting product from the polymerization reaction may be washed and dried, followed by anionic substitution reaction to have appropriate anions that may improve solubility in an organic solvent.

In an embodiment, the polymer ionic liquid may include a repeating unit that includes i) a cation of at least one of an ammonium cation, a pyrrolidinium cation, a pyridinium cation, a pyrimidinium cation, an imidazolium cation, a piperidinum cation, a pyrazolium cation, an oxazolium cation, a pyridazinium cation, a phosphonium cation, a sulfonium cation, a triazolium cation, and mixtures thereof, and ii) at least one anion of BF₄⁻, PF₆-, AsF₆-, SbF₆⁻, AlCl₄⁻, HSO₄⁻, ClO₄⁻, CH₃SO₃⁻, CF₃CO₂⁻, (CF₃SO₂)₂N⁻, (FSO₂)₂N⁻, Cl⁻, Br⁻, I⁻, SO₄²⁻⁻, CF₃SO₃⁻, (C₂F₅SO₂)₂N⁻, (C₂F₅SO₂)(CF₃SO₂)N⁻, NO₃⁻, Al₂Cl₇⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, and (O(CF₃)₂C₂(CF₃)₂O)₂PO⁻.

In an embodiment, the polymeric ionic liquid may be prepared by polymerization of ionic liquid monomers. For example, the ionic liquid monomers may have a polymerizable functional group such as a vinyl group, an allyl group, an acrylate group, or a methacrylate group, and may include a cation of at least one of an ammonium cation, a pyrrolidinium cation, a pyridinium cation, a pyrimidinium cation, an imidazolium cation, a piperidinum cation, a pyrazolium cation, an oxazolium cation, a pyridazinium cation, a phosphonium cation, a sulfonium cation, a triazolium cation, and mixtures thereof, and at least one of the above-listed anions.

Non-limiting examples of the ionic liquid monomers are 1-vinyl-3-ethylimidazolium bromide, a compound of Formula 2, or a compound of Formula 3:

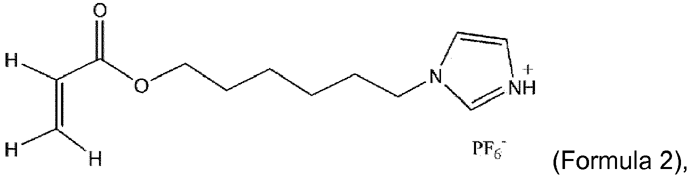

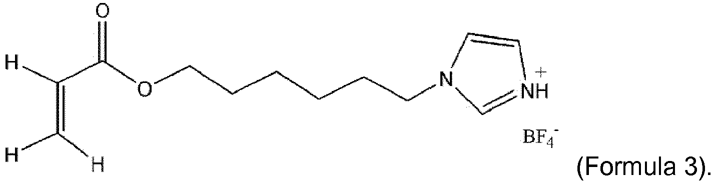

For example, the polymer ionic liquid can be a compound represented by Formula 4 or a compound represented by Formula 5:

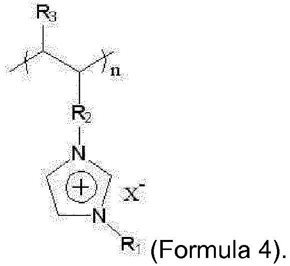

In Formula 4, R₁ and R₃ may be each independently a hydrogen, a substituted or unsubstituted C₁-C₃₀ alkyl group, a substituted or unsubstituted C₂-C₃₀ alkenyl group, a substituted or unsubstituted C₂-C₃₀ alkynyl group, a substituted or unsubstituted C₆-C₃₀ aryl group, a substituted or unsubstituted C₂-C₃₀ heteroaryl group, or a substituted or unsubstituted C₄-C₃₀ carbocyclic group;
R₂ may be a chemical bond, a C₁-C₃₀ alkylene group, a C₆-C₃₀ arylene group, a C₂-C₃₀ heteroarylene group, or a C₄-C₃₀ divalent carbocyclic group;
X⁻ indicates an anion of the ionic liquid; and
n may be from about 500 to 2800.

In formula 4, at least one hydrogen atom of the substituted C₁-C₃₀ alkyl group, the substituted C₂-C₃₀ alkenyl group, the substituted C₂-C₃₀ alkynyl group, the substituted C₆-C₃₀ aryl group, the substituted C₂-C₃₀ heteroaryl group, or the substituted C₄-C₃₀ carbocyclic group may have at least one substituents selected from a halogen atom (for example, CF₃, CH₃CF₂, CH₂F, CCl₃, and the like), a C₁-C₂₀ alkoxy group, a C₂-C₂₀ alkoxyalkyl group, a hydroxyl group (-OH), a nitro group (-NO₂), a cyano group (-CN), an amino group (-NH₂), an alkylamino group (RNH-wherein R is a C₁-C₁₀ alkyl group), a dialkylamino group (R₂N- wherein each R is the same or different C₁-C₁₀ alkyl group), an amidino group (-C(=NH)NH₂), a hydrazino group (-NHNH₂), a hydrazono group (=N-NH₂), a carbamoyl group (-C(O)NH₂), a carboxyl group or a salt thereof (-C(=O)OX wherein X is a hydrogen or a counterion), a sulfonyl group (-S(=O)₂-), a sulfamoyl group (NH₂-SO₂-), a sulfonic acid group or a salt thereof ((-SO₃X₂ wherein X is a hydrogen or a counterion), a phosphoric acid group or a salt thereof (-PO₃X₂ wherein X is a hydrogen or a counterion), a tosyl (CH₃C₆H₄SO₂-), a C₁-C₂₀ alkyl group, a C₂-C₂₀ alkenyl group, a C₂-C₂₀ alkynyl group, a C₁-C₂₀ heteroalkyl group, a C₆-C₂₀ aryl group, a C₇-C₂₀ arylalkyl group, a C₄-C₂₀ heteroaryl group, a C₅-C₂₀ heteroarylalkyl group, a C₄-C₂₀ heteroaryloxy group, a C₅-C₂₀ heteroaryloxyalkyl group, and a C₅-C₂₀ heteroarylalkyl group, provided that the substituted atomovideddunterion)unterion) group (-

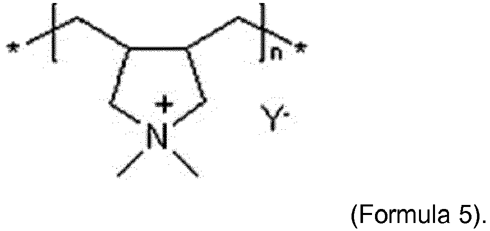

In Formula 5, Y- is an anion, such as BF₄⁻, PF₆-, AsF₆-, SbF₆⁻, AlCl₄⁻, HSO4⁻, ClO₄⁻, CH₃SO₃⁻, CF₃CO₂⁻, (CF₃SO₂)₂N⁻, (FSO₂)₂N⁻, Cl⁻, Br⁻, I⁻, SO₄²⁻⁻, CF₃SO₃⁻, (C₂F₅SO₂)₂N⁻, (C₂F₅SO₂)(CF₃SO₂)N⁻, NO₃⁻, Al₂Cl₇⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO-, (CF₃SO₂)₂CH-, (SF₅)₃C-, or (O(CF₃)₂C₂(CF₃)₂O)₂PO-; and n can be from 500 to 2800.

For example, in Formula 5, Y- may be bis(trifluoromethylsulfonyl)imide (TFSI), bis(fluorosulfonyl)imide, BF₄⁻, or CF₃SO₃⁻.The polymeric ionic liquid may include, for example a cation of poly(1-vinyl-3-alkylimidazolium), poly(1-allyl-3-alkylimidazolium), poly(1-methacryloyloxy-3-alkylimidazolium), and an anion of CH₃COO⁻, CF₃COO⁻, CH₃SO₃⁻, CF₃SO₃⁻, (CF₃SO₂)₂N⁻, (FSO₂)₂N⁻, (CF₃SO₂)₃C⁻, (CF₃CF₂SO₂)₂N⁻, C₄F₉SO₃⁻, C₃F₇COO⁻, and (CF₃SO₂)(CF₃CO)N⁻.

For example, the compound of Formula 5 may be polydiallydimethyl ammonium bis(trifluoromethylsulfonyl)imide.

In an embodiment, the polymer ionic liquid may include a low-molecular weight polymer, a thermally stable ionic liquid, and a lithium salt. The low-molecular weight polymer may have an ethylene oxide chain. The low-molecular weight polymer may be a glyme. Non-limiting examples of the glyme are polyethyleneglycol dimethylether (polyglyme), tetraethyleneglycol dimethyl ether (tetraglyme), and triethyleneglycol dimethylether (triglyme). According to an aspect, a solid electrolyte includes a garnet layer that conducts lithium ions; and an amorphous a lithium-lanthanum-zirconium oxide ("LLZO") surface of the garnet layer. The amorphous LLZO surface has less than 10% of its total area directly covered by lithium carbonate, and the garnet layer comprises a crystalline garnet, i.e., the crystalline phase having a garnet-type structure.

The solid electrolyte may be a sheet type, and the amorphous LLZO surface may cover about 90% or more of the major surface area of the sheet. The interface between the garnet layer and the amorphous LLZO may be arranged such that the crystallinity of the interface increases as the distance from the amorphous LLZO surface increases. The depth of the amorphous surface adjacent to the crystalline interface may be, for example, about 50 nm or more.

Each element of a lithium metal battery including a solid electrolyte according to an embodiment, and a method of manufacturing the lithium metal battery now will be described in further detail.

A positive active material for the positive electrode may include at least one of lithium cobalt oxide, lithium nickel cobalt manganese oxide, lithium nickel cobalt aluminum oxide, lithium iron phosphate, and lithium manganese oxide, but is not limited thereto. Any suitable positive active material may be used.

For example, the positive active material may be a compound represented by one of the following formulae: LiₐA_{1-b}B'_{b}D₂ (wherein 0.90≤a≤1.8, and 0≤b≤0.5); LiₐE_{1-b}B'_{b}O_{2-c}D_{c} (wherein 0.90≤a≤1.8, 0≤b≤0.5, and 0≤c≤0.05); LiE_{2-b}B'_{b}O_{4-c}D_{c} (wherein 0≤b≤0.5, and 0≤c≤0.05); LiₐNi_{1-b-c}Co_{b}B'_{c}D_{α} (wherein 0.90≤a≤1.8, 0≤b≤0.5, 0≤c≤0.05, and 0<α≤2); LiₐNi_{1-b-c}Co_{b}B'_{c}O_{2-α}F'_{α} (wherein 0.90≤a≤1.8, 0≤b≤0.5, 0≤c≤0.05, and 0<α≤2); LiₐNi_{1-b-c}Mn_{b}B'_{c}D_{α} (wherein 0.90≤a≤1.8, 0≤b≤0.5, 0≤c≤0.05, and 0<α≤2); LiₐNi_{1-b-c}Mn_{b}B'_{c}O_{2-α}F'_{α} (wherein 0.90≤a≤1.8, 0≤b≤0.5, 0≤c≤0.05, and 0<α≤2); LiₐNi_{b}E_{c}G_{d}O₂ (wherein 0.90≤a≤1.8, 0≤b≤0.9, 0≤c≤0.5, and 0.001≤d≤0.1); LiₐNi_{b}Co_{c}Mn_{d}GₑO₂ (wherein 0.90≤a≤1.8, 0≤b≤0.9, 0≤c≤0.5, 0≤d≤0.5, and 0.001 ≤e≤0.1 ); LiₐNiG_{b}O₂ (wherein 0.90≤a≤1.8, and 0.001 ≤b≤0.1 ); LiₐCoG_{b}O₂ (wherein 0.90≤a≤1.8, and 0.001 ≤b≤0.1 ); LiₐMnG_{b}O₂ (wherein 0.90≤a≤1.8, and 0.001 ≤b≤0.1 ); LiₐMn₂G_{b}O₄ (wherein 0.90≤a≤1.8, and 0.001 ≤b≤0.1); QO₂; QS₂; LiQS₂; V₂O₅; LiV₂O₅; Lil'O₂; LiNiVO₄; Li_{(3-f)}J₂(PO₄)₃ (wherein 0≤f≤2); Li_{(3-f)}Fe₂(PO₄)₃ (wherein 0≤f≤2); and LiFePO₄.

In the formulae above, A is at least one of nickel (Ni), cobalt (Co), and manganese (Mn); B' is at least one of aluminum (Al), nickel (Ni), cobalt (Co), manganese (Mn), chromium (Cr), iron (Fe), magnesium (Mg), strontium (Sr), vanadium (V), and a rare earth element; D is at least one of oxygen (O), fluorine (F), sulfur (S), and phosphorus (P); E is at least one of cobalt (Co), and manganese (Mn); F' is at least one of fluorine (F), sulfur (S), and phosphorus (P); G is at least one of aluminum (Al), chromium (Cr), manganese (Mn), iron (Fe), magnesium (Mg), lanthanum (La), cerium (Ce), strontium (Sr), and vanadium (V); Q is at least one of titanium (Ti), molybdenum (Mo), and manganese (Mn); I' is at least one of chromium (Cr), vanadium (V), iron (Fe), scandium (Sc), and yttrium (Y); and J is at least one of vanadium (V), chromium (Cr), manganese (Mn), cobalt (Co), nickel (Ni), and copper (Cu).

For example, the positive active material may be a compound represented by Formula 6, a compound represented by Formula 7, a compound represented by Formula 8, or a compound represented by Formula 9

LiₐNi_{b}Co_{c}Mn_{d}O (Formula 6),

wherein, in Formula 6, 0.90≤a≤1.8, 0≤b≤0.9, 0≤c≤0.5, and 0≤d≤0.5;

Li₂MnO₃ (Formula 7);

LiMO₂ (Formula 8);

wherein, in Formula 8, M can be Mn, Fe, Co, or Ni; and

LiₐNi_{b}Co_{c}Al_{d}O₂ (Formula 9),

wherein, in Formula 9, 0.90≤a≤1.8, 0≤b≤0.9, 0≤c≤0.5, and 0≤d≤0.5.

The positive electrode of the lithium metal battery may be manufactured as follows.

A positive active material, a binder, and a solvent are mixed to prepare a positive active material composition. A conducting agent may be further added into the positive active material composition. The positive active material composition is directly coated on a metallic current collector and dried to prepare a positive electrode plate. In an embodiment, the positive active material composition may be cast on a separate support to form a positive active material film, which may then be separated from the support and then laminated on a metallic current collector to prepare a positive electrode plate.

The binder is a composition that contributes to binding of an active material and a conductive material with a current collector, and thus an amount of the binder added may be from about 1 part by weight to about 50 parts by weight, based on 100 parts by weight of the total weight of the positive active material. Non-limiting examples of the binder include polyvinylidene fluoride ("PVDF"), polyvinyl alcohol, carboxymethylcellulose ("CMC"), starch, hydroxypropylcellulose, reproduced cellulose, polyvinylpyrrolidone, polytetrafluoroethylene, polyethylene, polypropylene, ethylene-propylene-diene terpolymer ("EPDM"), sulfonated EPDM, styrene butadiene rubber, fluorine rubber, and various copolymers. The amount of the binder may be from about 2 parts by weight to about 5 parts by weight, based on 100 parts by weight of the total weight of the positive active material. When the content of the binder is within this range, a binding force of the positive active material layer to the current collector may be satisfactory.

The conducting agent may be any suitable material that does not cause chemical change in the lithium metal battery and has conductivity. Non-limiting examples of the conducting agent include graphite such as natural graphite or artificial graphite; carbonaceous materials, such as carbon black, acetylene black, Ketjen black, channel black, furnace black, lamp black, or summer black; conductive fibers, such as carbon fibers or metal fibers; carbon fluoride; metal powder, such as aluminum or nickel powder; conductive whiskers, such as zinc oxide or potassium titanate; a conductive metal oxide, such as a titanium oxide; and a conductive material, such as a polyphenylene derivative.

The amount of the conducting agent may be from about 1 part by weight to about 10 parts by weight, for example, from about 2 parts by weight to about 5 parts by weight, based on 100 parts by weight of the total weight of the positive active material. When the amount of the conducting agent is within any of these ranges, the final positive electrode may have good conductivity characteristics.

A non-limiting example of the solvent is N-methylpyrrolidone.

The amount of the solvent may be from about 100 parts by weight to about 2,000 parts by weight, based on 100 parts by weight of the positive active material. When the amount of the solvent is within this range, a process for forming the positive active material layer may be easily carried out.

The amounts of the positive active material, the conducting agent, the binder, and the solvent may be any suitable levels for the manufacture of lithium metal batteries. At least one of the conducting agent, the binder, and the solvent may be omitted depending on the use and structure of a lithium metal battery.

The negative electrode may be, for example, a lithium metal thin film or a lithium metal alloy thin film, as described above.

A lithium metal alloy for the negative electrode may include lithium, and a metal/metalloid alloyable with lithium. Examples of the metal/metalloid alloyable with lithium are Si, Sn, Al, Ge, Pb, Bi, Sb, a Si-Y' alloy (wherein Y' is at least one of an alkaline metal, an alkaline earth metal, a Group 13 to Group 16 element, a transition metal, and a rare earth element, except for Si), a Sn-Y' alloy (wherein Y' is at least one of an alkaline metal, an alkaline earth metal, a Group 13 to Group 16 element, a transition metal, and a rare earth element, except for Sn). Y may be at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, and Po.

The solid electrolyte according to an embodiment of the present disclosure is used as the electrolyte. The amorphous film of the solid electrolyte is disposed to be adjacent to the lithium metal negative electrode or positive electrode. For example, the amorphous film of the solid electrolyte is disposed to be adjacent to the lithium metal negative electrode. The lithium metal battery comprises an interlayer between the lithium metal negative electrode and the solid electrolyte. The interlayer. The interlayer acts to increase the adhesion between the negative electrode and the solid electrolyte.

The lithium metal battery further comprises a protective layer on the lithium metal negative electrode in addition to the interlayer. The lithium metal battery according to an embodiment of the present disclosure includes a separator and/or a lithium salt-containing non-aqueous electrolyte suitable for use in lithium metal batteries.

The separator may be an insulating thin film having high ion permeability and high mechanical strength. The separator may have a pore diameter of about 0.01 µm to about 10 µm, and a thickness of about 5 µm to about 20 µm. Non-limiting examples of the separator are olefin-based polymers, such as polypropylene, and sheets or non-woven fabric made of glass fiber or polyethylene. When a lithium metal battery uses a solid polymer electrolyte, the solid polymer electrolyte may also serve as the separator.

For example, the separator may be a monolayer or a multilayer including at least two layers of polyethylene, polypropylene, polyvinylidene fluoride, or a combination thereof. For example, the separator may be a mixed multilayer, such as a two-layer separator of polyethylene/polypropylene, a three-layer separator of polyethylene/polypropylene/polyethylene, or a three-layer separator of polypropylene/polyethylene/polypropylene. The separator may include an electrolyte including a lithium salt and an organic solvent.

The lithium salt-containing nonaqueous electrolyte may include a nonaqueous electrolyte and a lithium salt. The nonaqueous electrolyte may be a nonaqueous liquid electrolyte, an organic solid electrolyte, or an inorganic solid electrolyte.

The nonaqueous liquid electrolyte may include an organic solvent. The organic solvent may be any suitable organic solvent. For example, the organic solvent may be at least one propylene carbonate, ethylene carbonate, fluoroethylene carbonate, butylene carbonate, dimethyl carbonate, diethyl carbonate, methyl ethyl carbonate, methylpropyl carbonate, ethylpropyl carbonate, methyl isopropyl carbonate, dipropyl carbonate, dibutyl carbonate, chloroethylene carbonate, benzonitrile, acetonitrile, tetrahydrofuran, 2-methyltetrahydrofuran, γ-butyrolactone, 1,3-dioxolane, 4-methyldioxolane, N,N-dimethyl formamide, N,N-dimethyl acetamide, dimethylsulfoxide, dioxane, 1,2-dimethoxyethane, sulfolane, dichloroethane, chlorobenzene, nitrobenzene, diethylene glycol, and dimethyl ether.

For example, the lithium salt may be at least one of LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF_{2x+1SO2})(C_{y}F_{2y+1SO2}) (wherein x and y are natural numbers), LiCl, and Lil. For example, to improve charge-discharge characteristics and resistance to flame in a lithium metal battery, pyridine, triethylphosphate, triethanolamine, cyclic ether, ethylene diamine, n-glyme, hexamethyl phosphoramide, nitrobenzene derivative, sulfur, a quinone imine dye, N-substituted oxazolidinone, N, N-substituted imidazolidine, ethylene glycol dialkyl ether, an ammonium salt, pyrrole, 2-methoxyethanol, or aluminum trichloride may be added to the nonaqueous electrolyte. In an embodiment, to provide nonflammable characteristics, a halogen-containing solvent such as carbon tetrachloride, ethylene trifluoride, or the like may be further added to the nonaqueous electrolyte, if desired.

For example, the lithium metal battery according to an embodiment may have improved capacity and improved lifetime characteristics, and thus may be used in a battery cell for use as a power source of a small device, and may also be used as a unit battery of a medium-large size battery pack or battery module that include a plurality of battery cells for use as a power source of a medium-large size device.

Examples of the medium-large size device are electric vehicles ("EVs"), including hybrid electric vehicles ("HEVs") and plug-in hybrid electric vehicles ("PHEVs"); electric two-wheeled vehicles, including E-bikes and E-scooters; power tools; power storage devices; and the like, but are not limited thereto.

Hereinafter, the present disclosure will now be described in detail with reference to the following examples. However, these examples are not intended to limit the scope of the one or more embodiments of the present disclosure.

### EXAMPLES

### Example 1: Preparation of lithium-lanthanum-zirconium oxide ("LLZO") film

Li_{6.4}La₃Zr_{1.7}W_{0.3}O₁₂ (W-doped LLZO) powder was uniaxially-pressed with a pressure of about 200 megapascals (MPa) into a pellet form. Subsequently, the pellet was covered with mother powder (i.e., Li_{6.4}La₃Zr_{1.7}W_{0.3}O₁₂), and then, heat treatment was performed thereon at a temperature of 1,200°C for 4 hours. A surface of the pellet obtained therefrom was polished to form a lithium-lanthanum-zirconium oxide ("LLZO") film having a thickness of about 500 micrometers.

### Example 2: Preparation of lithium-lanthanum-zirconium oxide ("LLZO") film

Li_{6.4}La₃Zr_{1.7}W_{0.3}O₁₂ (W-doped LLZO) powder was hot pressed into a thick pellet with a pressure of 20 MPa and temperature of 1,150°C for 2 hours (hrs). Subsequently, the pellet was wire-saw-sliced into about 350 micrometer thick discs. Some of the discs were polished to 250 micrometer or 150 micrometer thinner discs. The pellets were ultrasound cleaned in hexane to remove cutting and polishing fluids and dust. Finally, the pellets were laser cut to needed size and shape to form the LLZO film having a thickness of about 60 micrometers (µm).

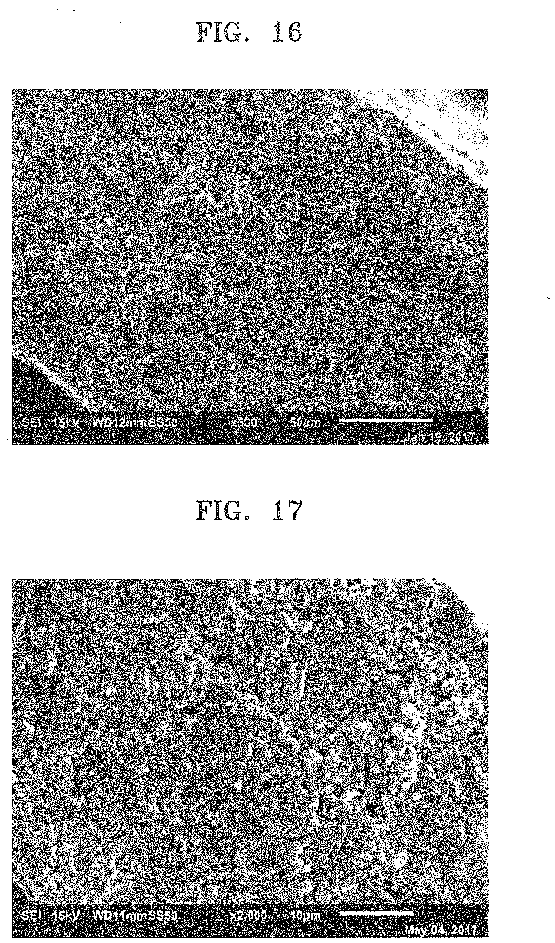

Fig. 16 shows the fractured cross-sectional SEM image of the pellets.

### Example 3: Preparation of LLZO film

A Li_{4.9}Ga_{0.5+δ}La₃Zr_{1.7}W_{0.3}O₁₂ (0≤δ≤1.6) film was prepared by a tape casting method. The Li_{4.9}Ga_{0.5+δ}La₃Zr_{1.7}W_{0.3}O₁₂ (0≤δ≤1.6) powder was mixed in the tape casting slurry listed in Table 1. The slip was then casted into a thin film. After drying, the film was placed in a Pt box lined with Li_{4.9}Ga_{0.5+δ}La₃Zr_{1.7}W_{0.3}O₁₂ (0≤δ≤1.6) powder but containing 30% excess Li to LLZO tape. After placed on the LLZO tape on the flat powder bed, more of the Li_{4.9}Ga_{0.5+δ}La₃Zr_{1.7}W_{0.3}O₁₂ (0≤δ≤1.6) powder was used covered on the tape. The box with the tape was subjected to heat treatment with the following schedule:
Heating from about 25°C to 1050°C, heating rate of 300°C/hour (hr);
Hold at about 1050°C for 2 hrs; and
cooling from about 1050°C to 25°C, cooling rate of 200°C/hr.

Fig. 17 shows a cross sectional SEM image of the fired LLZO tape, i.e., a fractured LLZO membrane made by tape casting having a thickness of about 60 micrometers.

**Table 1**

| Ingredient | Weight (grams) |
|---|---|
| LLZO garnet powder (0.6 micrometers) | 17 |
| solvent: a mixture of ethanol (77 volume percent (vol%)), butanol (19 vol%), and propylene glycol (4 vol%) | 33 |
| Dibutyl phthalate | 1.88 |
| PVB-B79 | 2.0 |
| Anti-terra 202 (dispersant) | 0.34 |

### Example 3a: Preparation of LLZO film

LLZO film was prepared as in Example 1, except that Li_{4.9}La_{2.5}Ca_{0.5}Zr_{1.7}Nb_{0.3}O₁₂ (Ca, Nb-doped LLZO) powder was used instead of Li_{6.4}La₃Zr_{1.7}W_{0.3}O₁₂ (W-doped LLZO) powder.

### Example 3b: Preparation of LLZO film

LLZO film was prepared as in Example 1, except that Li_{4.9}Ga_{0.s+δ}La_{2.5}Zr_{1.7}Nb_{0.3}O₁₂(0≤δ≤1.6)(Ga, Nb-doped LLZO) powder was used instead of Li_{6.4}La₃Zr_{1.7}W_{0.3}O₁₂ (W-doped LLZO) powder.

### Example 3c: Preparation of LLZO film

LLZO film was prepared as in Example 1, except that Li_{6.272}La₃Zr_{1.7}W_{0.3}O₁₂ (W-doped LLZO) powder was used instead of Li_{6.4}La₃Zr_{1.7}W_{0.3}O₁₂ (W-doped LLZO) powder.

### Example 3d: Preparation of LLZO film

LLZO film was prepared as in Example 1, except that Li_{5.39}Ga_{0.5+δ}La₃Zr_{1.7}W_{0.3} O₁₂(00δ≤03 pt (Ga,W-doped LLZO) powder was used instead of Li_{6.4}La₃Zr_{1.7}W_{0.3}O₁₂ (W-doped LLZO) powder.

### Example 3e: Preparation of LLZO film

LLZO film was prepared as in Example 1, except that the heat treatment was performed at a temperature of 1,140°C for 2 hours.

### Example 4: Preparation of solid electrolyte

The LLZO film having a thickness: about 350µm was obtained in the same manner as in Example 1, except that the thickness of the LLZO film was adjusted to be about 350µm The LLZO film (having a thickness of about 350 µm) of Example 1 was irradiated with an ultraviolet ("UV")-laser (neodymium-doped yttrium aluminum garnet ("Nd:YAG") laser) so that upper and lower portions of the LLZO film were surface-treated. Accordingly, a solid electrolyte having a mesh or grid type pattern (and an area of 1 centimeter (cm) X 1 cm) on the upper and lower portions was formed. The mesh or grid type pattern had a spacing interval between laser lines (center-on-center) of about 50 micrometers, between laser lines (edge-to-edge) of about 20 micrometers, and a laser size or line thickness of about 30 micrometers. To minimize surface reactions between the solid electrolyte and moisture in the air, the surface treatment associated with the laser irradiation was performed in a dry-air atmosphere to prepare a solid electrolyte.

Conditions for the UV laser irradiation are listed in Table 2.

**Table 2**

| Process variable | Condition |
|---|---|
| Wavelength | 355 nanometers (nm) |
| Laser beam spot size | 30 µm |
| Laser power | About 1 watt (W) |
| Frequency | 57 hertz (Hz) |
| Scanning speed | 2,000 millimeters per second (mm/s) |
| Laser pulse repetition rate | 70 kilohertz (kHz) |

### Example 4a: Preparation of solid electrolyte

Example 4 was repeated except that the LLZO film of Example 3a was used instead of the LLZO film of Example 1.

### Example 4b: Preparation of solid electrolyte

Example 4 was repeated except that the LLZO film of Example 3b was used instead of the LLZO film of Example 1.

### Examples 5: Preparation of solid electrolytes

Solid electrolytes was prepared as in Example 4, except that the conditions for the UV laser irradiation were changed such that solid electrolyte having a mesh type pattern having an interval of about 150 µm was prepared. The mesh type pattern was formed on both upper and lower portions of the corresponding solid electrolyte.

### Example 6: Preparation of solid electrolyte

Solid electrolyte was prepared as in Example 4, except that the conditions for the UV laser irradiation were changed such that solid electrolyte having a mesh type pattern having an interval of about 30 µm was prepared.

### Example 7: Preparation of solid electrolyte

Solid electrolytes were prepared as in Example 4, except that the condition for the UV laser irradiation were changed such that only one surface of the LLZO film was surface-treated to form solid electrolyte having a mesh type pattern having an interval of about 30 µm.

### Example 8: Preparation of solid electrolyte

Example 5 was repeated except that the LLZO film having a thickness of 60 µm of Example 2 was used instead of the LLZO film having a thickness of about 350 µm of Example 1. A solid electrolyte having a mesh type pattern having an interval of about 50 µm and an area of 1 cm X 1 cm was formed on both the upper and lower surfaces of the solid electrolyte.

### Example 9: Preparation of lithium metal battery

First, a positive electrode was prepared as follows.

LiCoO₂ ("LCO"), a conducting agent (CA) (Super-P; Timcal Ltd.), polyvinylidene fluoride ("PVDF"), and N-methylpyrrolidone solvent were mixed to obtain a composition for forming a positive active material layer. A mixing weight ratio of the LCO to the conducting agent ("CA") to the PVDF in the composition was, for example, LCO:CA:PVDF = 97:1.5:1.5. The amount of the N-methylpyrrolidone solvent was about 137 g when an amount of the LCO was 97 g.

An upper portion of an aluminum foil (having a thickness of about 15 µm) was coated with the composition for forming a positive active material layer, dried at a temperature of 25°C, and then, vacuum-dried at a temperature of 110°C, to produce a positive electrode.

The resulting positive electrode was immersed in an ionic liquid, e.g., N-methyl-N-propyl pyrrolidinium bis(fluorosulfonyl) imide ("PYR₁₃FSI") (the structure of the PYR₁₃+ cation has the accompanying formula), and a gold (Au) layer was stacked thereon to a thickness of about 1.5 µm. Then, the solid electrolyte of Example 4, a lithium metal negative electrode (having a thickness of about 20 µm), and a current collector (copper foil) were stacked on an upper portion of the positive electrode including the gold (Au) layer stacked thereon, to produce a lithium metal battery (i.e., a hybrid electrolyte cell) having a stacked structure of FIG. 8.

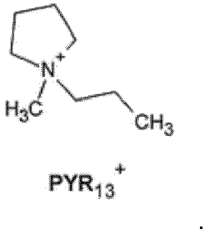

A liquid electrolyte was added to a space between the positive electrode and the lithium metal negative electrode, thereby preparing a lithium metal battery. The liquid electrolyte was an electrolyte having 1.0 M LiN(SO₂F)₂ (hereinafter, referred to as LiFSI) dissolved in a mixed solvent containing 1.2-dimethoxyethane ("DME") and 1,1,2,2-tetrafluoroethyl 2,2,3,3-tetrafluoropropyl ether ("TTE") at a volume ratio of 2:8.

### Examples 10 to 13: Preparation of lithium metal batteries

Lithium metal batteries were prepared as in Example 9, except that solid electrolytes of Examples 5 to 8 were used instead of the solid electrolyte of Example 4, respectively.

### Example 14: Preparation of lithium symmetric cell

Both sides of the solid electrolyte of Example 5 were each sputtered with Au to form a Au film. Subsequently, a lithium metal negative electrode was stacked on an upper portion of the Au film, and a heat treatment was performed thereon at a temperature of about 200°C. Then, a resting time was maintained at the same temperature for 20 minutes to allow adhesion of molten Li to the LLZO solid electrolyte, thereby preparing a lithium symmetric cell. To minimize the formation of contaminants on the surface of the molten Li, the preparation of the lithium symmetric cell was performed in a glove box in an argon gas atmosphere.

### Example 15: Preparation of lithium metal battery

A lithium metal battery was prepared as in Example9, except that a polyethylene film was stacked instead of the gold (Au) layer.

### Comparative Example 1: Preparation of solid electrolyte

Li_{6.4}La₃Zr_{1.7}W_{0.3}O₁₂ prepared by Example 1 was wire-saw-sliced into 500 µm discs. Then, a Li₇La₃Zr₂O₁₂ amorphous oxide film having an average thickness of 0.5 µm was deposited on both surfaces of the disc by sputtering to obtain a solid electrolyte structure.

The solid electrolyte structure was placed between two stainless steel plates, and an impedance analyzer was connected to measure alternating current impedance. The measured lithium ion conductivity of the solid electrolyte was 1×10⁻⁶ siemens per centimeter (S/cm).

According to Comparative Example 1, the amorphous phase was present inside the solid electrolyte so that the conduction of lithium-disrupted. Thus, it was confirmed that the solid electrolytes of Comparative Example 1 showed low ion conductivity as compared to the solid electrolyte of Preparation Example 1.

### Comparative Example 2: Preparation of solid electrolyte

Precursors, such as LiOH·H₂O, Al₂O₃, GeO₂, and NH₄H₂PO₄, were weighed and mixed under stoichiometric conditions to produce 3 g of a ceramic material. Then, the mixture was added to a platinum crucible, and was heat-treated at a temperature of about 500°C for 2 hours. Next, the resulting powder was dry-milled in a ball mill with gate balls for 1 hour. Then, the resulting powder was heat-treated in a platinum crucible at a temperature of about 900°C for 2 hours, followed by being crushed again under the same conditions as before to prepare a lithium aluminum germanium phosphate ("LAGP") powder. 1 g of the lithium aluminum germanium phosphate ("LAGP") powder was inserted into the mold and subjected to uniaxial pressing under a pressure of 4 tons to obtain pellets. The pellets were heat-treated at 950°C for 2 hours to obtain a LAGP layer having a thickness of 700µm and a density of 85%.

The above procedure was repeated to obtain three LAGP layers, and the three LAGP layers were thus formed to measure the ion conductivity, under three conditions i) before laser beam irradiation, ii) after laser beam irradiation, or iii) after heat treatment for recrystallization, respectively.

The transmission electron microscopy/energy dispersive X-ray (TEM/EDX) analysis was performed on the layers prepared according to Comparative Example 2, and the results are shown in FIGs .12 and 13.

Referring to the analysis results, it was confirmed that, when a film was prepared using crystalline LLZO particles or precursors and a solid electrolyte film was finally prepared using laser only without performing high-temperature heat treatment (1,000°C or higher) as shown in Comparative Example 2, the resulting amorphous film did not have high density. When crystalline LLZO particles were used in a slurry form (using toluene/ethanol solvent) and a tape casting process and laser treatment was performed over the entire particles in the slurry form, the resulting film did not have high density, and had a porosity of 22% or less. In addition, due to weak adhesion between the particles, when a laser beam was applied, the cohesion between the particles was disrupted before melting. Thus, a liquid-impermeable non-crystalline LLZO film was not formed, and accordingly, was not use in a hybrid-structured electrolyte cell. In addition, as shown in Evaluation Example 8, the solid electrolyte that was prepared showed very low ion conductivity of less than 10⁻⁶ S/cm.

### Comparative Example 3: Preparation of lithium metal battery

A lithium metal battery was prepared as in Example 9, except that the solid electrolyte of Comparative Example 1 was used instead of the solid electrolyte of Example 4.

### Comparative Example 4: Preparation of lithium symmetric cell

Lithium symmetric cell was prepared as in Example 14, except that the solid electrolytes of Comparative Example 1 was used instead of the solid electrolyte of Example 5.

### Comparative Example 5: Preparation of lithium symmetric cell

Lithium symmetric cell was prepared in the same manner as in Example 14, except that the solid electrolytes of Comparative Example 2 were used instead of the solid electrolyte of Example 5.

### Evaluation Example 1. Scanning electron microscopic ("SEM") analysis

### 1) Solid electrolytes of Examples 4 and 5.

The SEM analysis was performed on the solid electrolytes of Examples 4 and 5.

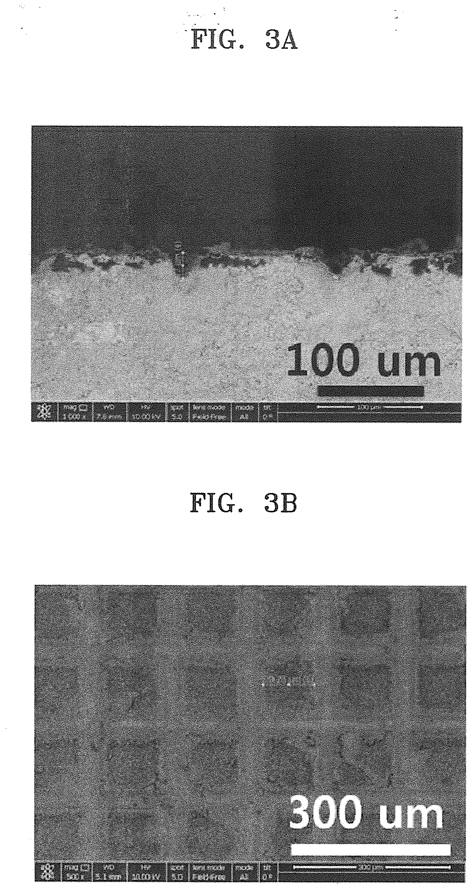

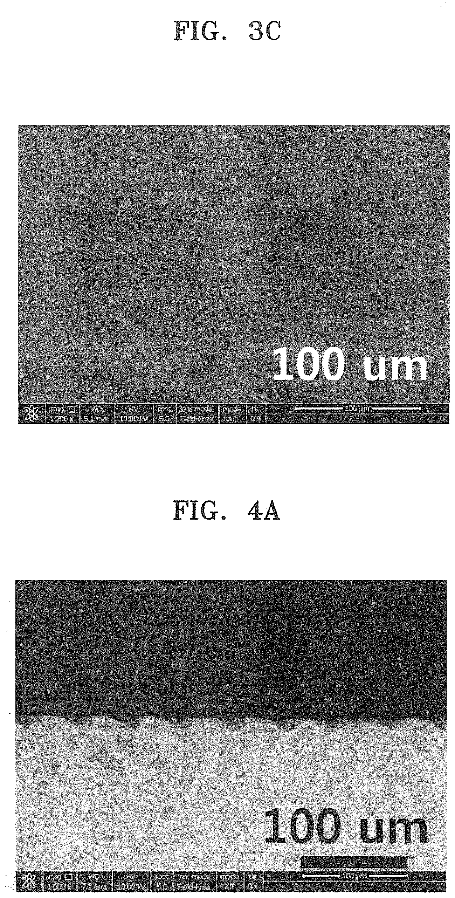

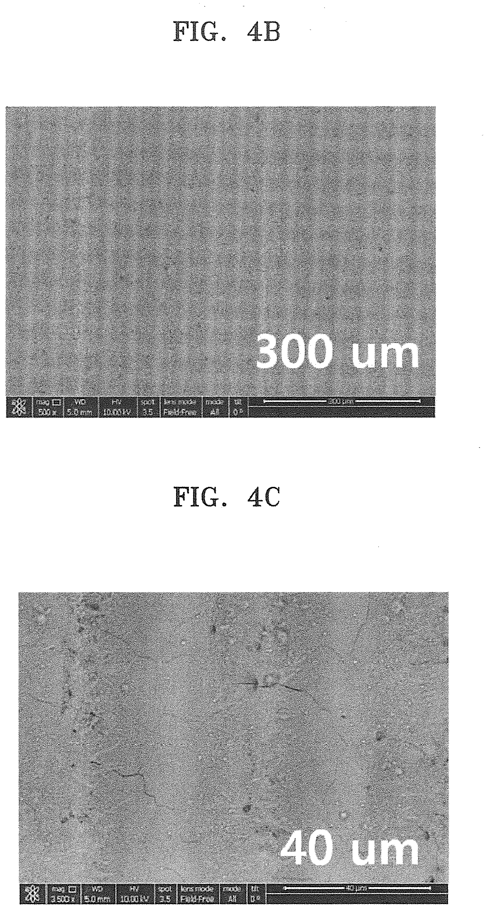

An SEM used herein was SU-8030 manufactured by Hitachi Company. SEM images of the solid electrolyte of Example 4 were shown in FIGS. 3A to 3C, and SEM images of the solid electrolyte of Example 5 were shown in FIGS. 4A to 4C.

Referring to the figures, it was confirmed that, due to the surface treatment performed on the LLZO solid electrolyte using the laser irradiation, the surface area of the LLZO solid electrolyte increased. Accordingly, it was also confirmed that, when the LLZO solid electrolyte was in contact with a lithium metal negative electrode, the activation area of the LLZO solid electrolyte also increased.

### 2) Solid electrolyte of Example 7

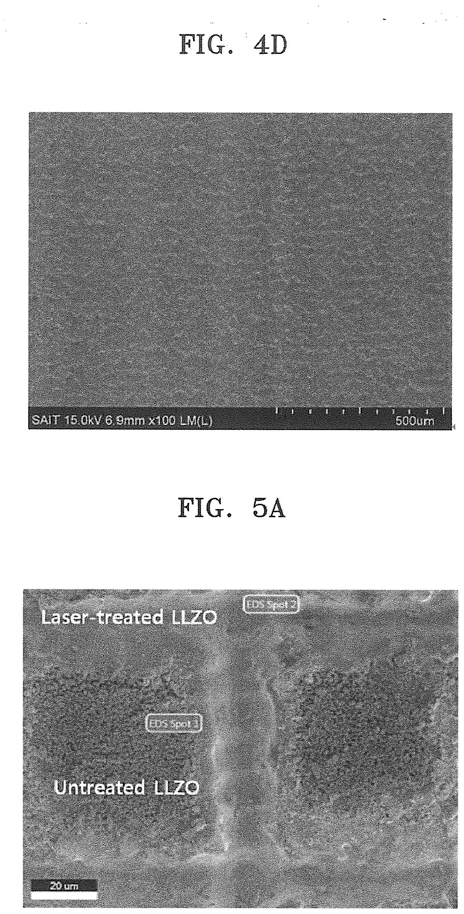

The SEM analysis was performed on the solid electrolyte of Example 7 under the same conditions as the SEM analysis performed on the solid electrolytes of Examples 4 and 5. The analysis result of the solid electrolyte prepared according to Example 4 is shown in FIG. 4D.

Referring to FIG. 4D, it was confirmed that the surface of the solid electrolyte had an irregular shape. The solid electrolyte of Example 5 exhibited almost the same analytical results as the solid electrolyte of Example 4.

### Evaluation Example 2: Transmission electron microscopy/energy dispersive X-ray ("TEM/EDX") analysis

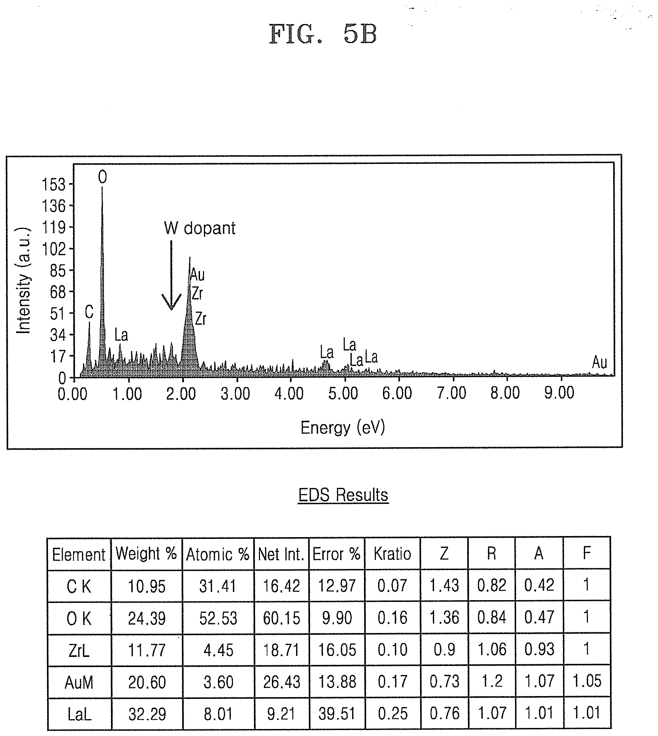

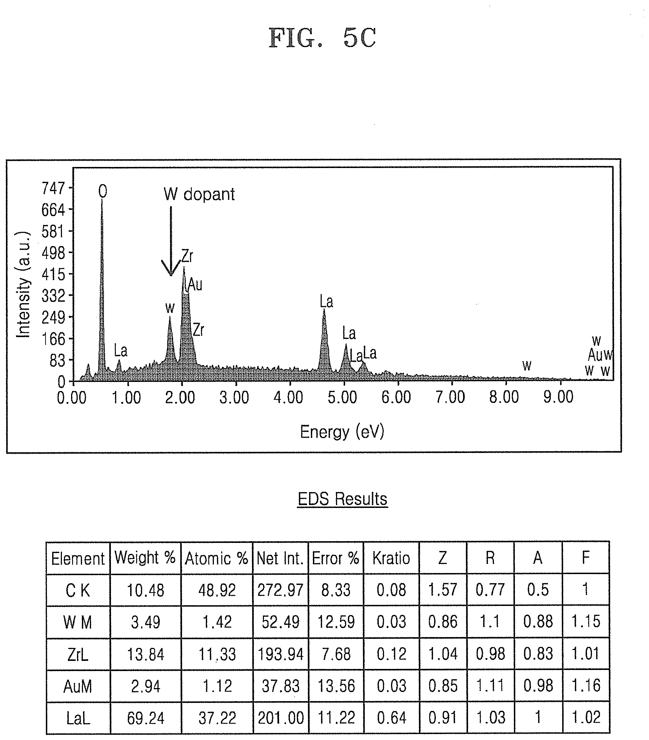

The TEM/EDX analysis was performed on the solid electrolyte of Example 4. The amorphous film of the solid electrolyte of Example 4 at EDS Spot 1 and EDS Spot 2 (see FIG. 5A) was subjected to the TEM/EDX analysis. The EDS results for Spot 1 are provided in FIG. 5B, and the EDS results for Spot 2 are provided in FIG. 5C.

Referring to the analysis, it was confirmed that an amount of tungsten, which serves as a dopant in the non-crystalline phase, was reduced to 1 atomic% or less in the solid electrolyte of Example 4. Thus, when the solid electrolyte of Example 4 or the like was used, a lithium metal battery including the solid electrolyte may have improved durability.

### Evaluation Example 3: TEM analysis

### 1) Solid electrolyte of Example 4

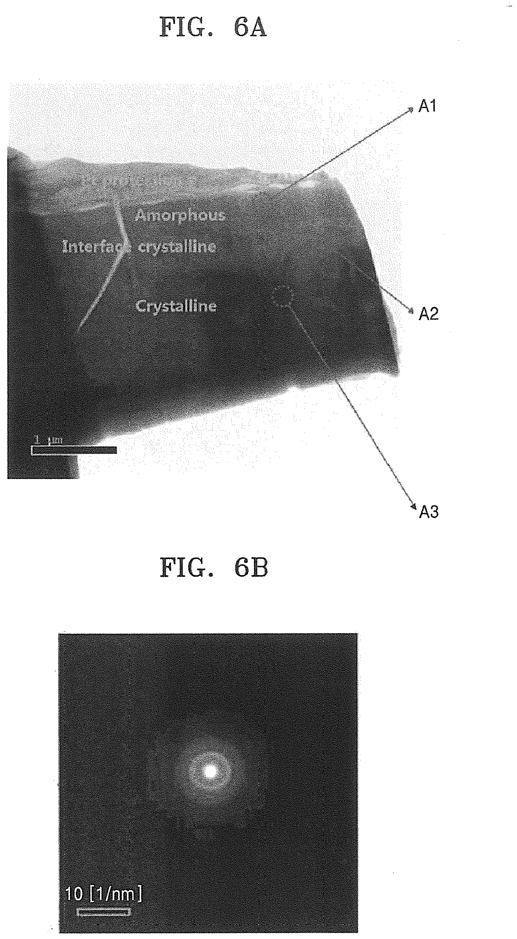

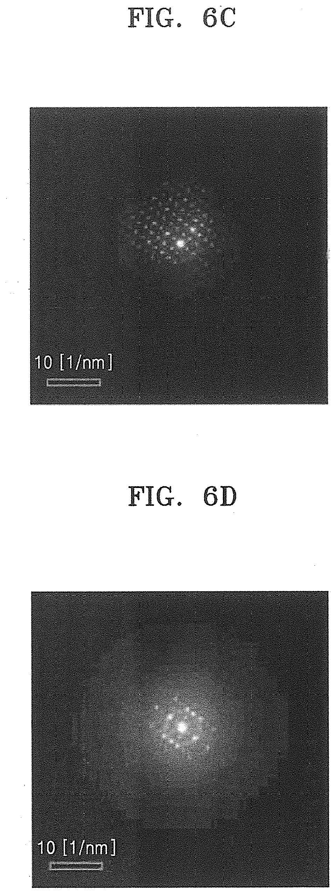

The state of the solid electrolyte of Example 4 was observed using a TEM for analysis. An analyzing device used herein was Titan cubed 60-300 manufactured by FEI, and the analysis results are shown in FIGS. 6A to 6D.

FIGS. 6B to 6D are each an enlarged view showing A1, A2, and A3 regions of FIG. 6A. As shown in FIG. 6A, an amorphous film was formed on the surface of the solid electrolyte, and a garnet-structured crystalline phase layer was formed inside the amorphous film (see FIG. 6C). In addition, the presence of a semi-crystalline phase film was observed between the amorphous film and the crystalline phase layer (see FIG. 6B).

### Evaluation Example 4: Electrochemical performance

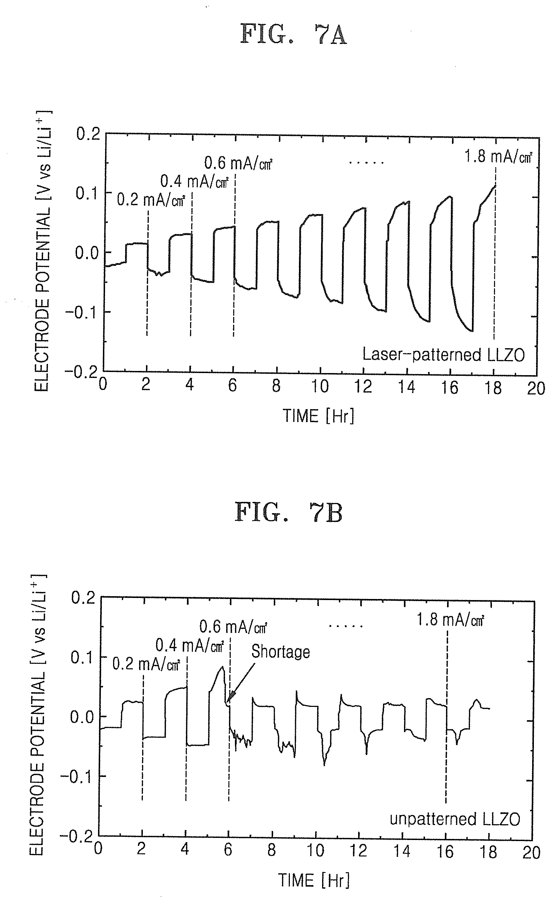

The Li-deposition/stripping test was performed on the lithium symmetric cells of Example 14 and Comparative Example 4 by using a constant current method for every 1 hour. The electrochemical performance of the lithium symmetric cells of Example 14 and Comparative Example 4 was tested as current density was increased stepwise from 0.2 milliampere per square centimeter (mA/cm²) to 1.8 mA/cm², and the results are shown in FIGS. 7A and 7B.

Referring to FIGS. 7A and 7B, shortage signals were observed at 0.6 mA/cm² in the lithium symmetric cell of Comparative Example 4 (unpatterned-LLZO). However, it was confirmed that the lithium symmetric cell of Example 14 (laser-patterned LLZO) was more stable against shorting, without shortage until reaching 1.8 mA/cm².

### Evaluation Example 5: Interfacial resistance

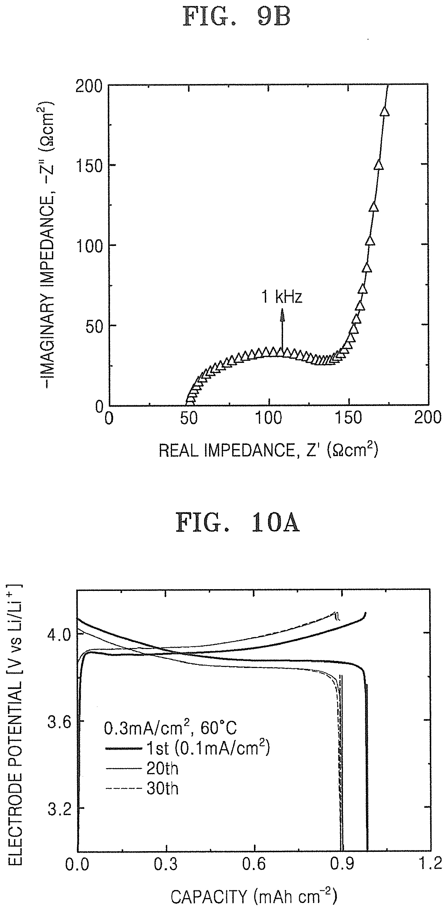

Regarding the lithium metal batteries of Example 9 and Comparative Example 3, an impedance analyzing device (Solartron 1260A Impedance/Gain-Phase Analyzer) was used to measure resistance at a temperature of 25°C according to the 2-probe method. The conditions included an amplitude of ±10 millivolts (mV) and a frequency range from 0.1 Hz to 1 MHz. Nyquist plots of the impedance measurement results obtained at 24-hour elapsed time after the preparation of the lithium metal batteries of Example 9 and Comparative Example 3 were shown in FIGS. 9A and 9B, respectively.

Referring to FIGS. 9A and 9B, it was confirmed that, as a result of the impedance measurement, the overall interfacial resistance of the cell was reduced from about 100 square centimeters (Ω cm²) to about 25 Ωcm² upon the laser patterning. Such reduction of the overall interfacial resistance was believed to be caused by the increased active area associated with the Li deposition/stripping reactions upon the laser patterning.

### Evaluation Example 6: Charge/discharge characteristics

### Lithium metal batteries (Hybrid electrolyte cells) of Example 9 and Comparative Example 3

The charge/discharge characteristics of the lithium metal batteries of Example 9 and Comparative Example 3 were evaluated as follows. A charge/discharge cycle was driven at a current density of 0.3 mA/cm².

For the first charge/discharge of the lithium metal battery of Example 9, the cell was charged with a constant current of 0.1 C until a voltage thereof reached 4.1 V, and maintained at a constant voltage until a current thereof reached 0.05 C. Once the cell charging was completed, after a quiet (open circuit) period of about 10 minutes, constant current discharge was performed thereon with a constant current of 0.1 C until a voltage thereof reached 3 V. For the second charge/discharge cycle, the cell was charged with a constant current of 0.2 C until a voltage thereof reached 4.1 V, and maintained at a constant voltage until a current thereof reached 0.05 C. Once the cell charging was completed, after a rest period of about 10 minutes, constant current discharge was performed with a constant of 0.2 C until a voltage thereof reached 3 V.

When the cell was charged with a constant current of 1 C until a voltage thereof reached 4.1 V, and maintained at a constant voltage until a current thereof reached 0.05 C, the lifespan evaluation was performed thereon. Once the cell charging was completed, after a rest period of about 10 minutes, constant current discharge was performed thereon with a constant current of 1 C until a voltage thereof reached 3 V, and such a cycle was repeatedly performed for the evaluation.

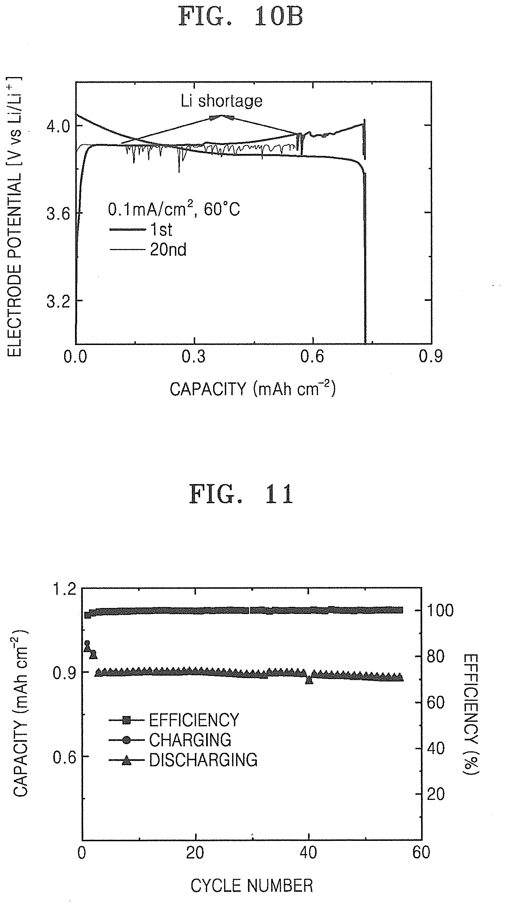

The results of the evaluation of the charge/discharge characteristics are shown in FIGS. 10A, 10B, and FIG. 11. FIGS. 10A and 10B show results regarding characteristics of capacity-dependent electrode potential changes of the lithium metal batteries of Example 9 and Comparative Example 3, respectively.

FIG. 11 shows results regarding capacity changes and efficiency characteristics of the lithium metal battery of Example 9.

Referring to FIG. 10B, it was confirmed that, when the cell including the laser-untreated LLZO (Comparative Example 3) was charged/discharged using a current density of 0.3 mA/cm² according to the galvanostatic method, voltage noise caused by Li shortage was observed during the 1^{st} and the 2^{nd} charge cycles.

However, it was confirmed that, when the cell including the laser-treated LLZO (Example 9) was charged/discharged, as shown in FIG. 10A, the charge/discharge cycle was driven without shortage upon Li penetration. In addition, as shown in FIG. 11, when charged/discharged over 50 cycles, the cell showed high capacity retention rate and efficiency characteristics. That is, it was confirmed that the surface of the amorphous film formed by the laser patterning had effectively prevented the growth and propagation of Li ions through a grain boundary during charge/discharge of the cell.

### Lithium metal battery of Example 15

In the same manner as in the evaluation of the charge/discharge characteristics of the lithium metal batteries of Examples 9, charge/discharge characteristics of the lithium metal battery of Example 15 were evaluated. A charge/discharge cycle was driven at a current density of 0.5 mA/cm².

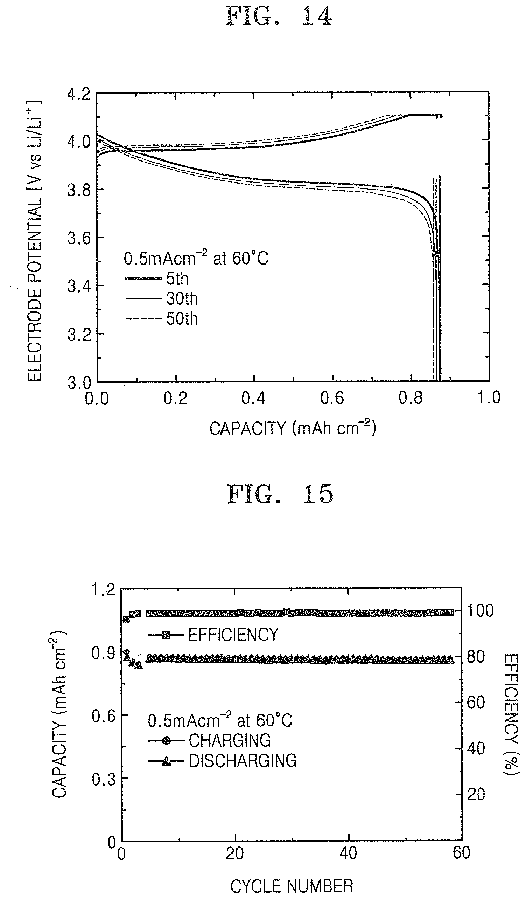

The evaluation results are shown in FIGS. 14 and 15.

FIG. 14 shows results regarding characteristics of capacity-dependent electrode potential changes of the lithium metal battery of Example 15, and FIG. 15 shows capacity changes and efficiency characteristics of the lithium metal battery of Example 15.

Referring to FIGS. 14 and 15, it was confirmed that the lithium metal battery prepared according to Example 15 had excellent electrode potential, capacity retention rate, and efficiency characteristics when using a current density of 0.5 mA/cm².

### Evaluation Example 7: Ion conductivity

### 1) Ion conductivity at room temperature (25°C)

The ion conductivity of the solid electrolytes of Example 4 and Comparative Example 1 was examined at room temperature (25°C). The solid electrolyte was placed between two stainless steel plates, and an impedance analyzer was connected thereto to measure alternating current impedance. The results are shown in Table 3.

**Table 3**

| | Ion conductivity at 25°C (Siemens per centimeter (Scm⁻¹)) |
|---|---|
| Example 4 | 2.5 × 10⁻⁴ |
| Comparative Example 1 | 1 × 10⁻⁶ |

Referring to Table 3, it was confirmed that the solid electrolyte prepared according to Example 4 had improved ion conductivity at room temperature compared to the solid electrolytes prepared according to Comparative Example 1.

### 2) Ion conductivity at high temperature (60°C)

The ion conductivity of the solid electrolytes of Example 4, Examples 4a and Example 4b was examined at high temperature (60°C). The solid electrolyte was placed between two stainless steel plates, and an impedance analyzer was connected thereto to measure alternating current impedance. The results are shown in Table 4.

**Table 4**

| | Ion conductivity at 60°C (Scm⁻¹) |
|---|---|
| Example 4 | 1.16 × 10⁻³ |
| Example 4a | 1.2 × 10⁻³ |
| Example 4b | 1.4 × 10⁻³ |

Referring to Table 4, it was confirmed that the solid electrolytes prepared according to Example 4, Example 4a, and Example 4b had improved ion conductivity at high temperature.

### Evaluation Example 8

X-ray diffraction analysis of the LLZO films obtained according to Examples 3c to 3e was carried out.

As a result of X-ray diffraction analysis on each LLZO film, the mixing ratio of each phase was examined, and the results are shown in Table 5 below

**Table 5**

| | Composition |
|---|---|
| Example 3c | 95 weight percent (wt%) cubic garnet |
| | 2 wt% La₂Zr₂O₇ |
| | 2 wt% cubic La₂O₃ |
| | 1 wt% W₃O₈ |
| Example 3d | 97 wt% cubic phase |
| | 3 wt% La₂Zr₂O₇ |
| Example 3e | 99.5 wt% cubic phase |
| | 0.5 wt% La₂Zr₂O₇ |

As described above, according to an embodiment, a solid electrolyte for a lithium metal battery is surface-treated with a laser beam so that an active area of the solid electrolyte increases, and an amorphous film is formed on a surface of the solid electrolyte. In this regard, when such the solid electrolyte is used, interfacial resistance between the solid electrolyte and a lithium metal negative electrode may be reduced, and growth and propagation of lithium ions in the solid electrolyte may be efficiently suppressed.

It should be understood that embodiments described herein should be considered in a descriptive sense only and not for purposes of limitation. Descriptions of features, advantages, or aspects within each embodiment should typically be considered as available for other similar features, advantages, or aspects in other embodiments.

While an embodiment has been described with reference to the figures, it will be understood by those of ordinary skill in the art that various changes in form and details may be made therein without departing from the scope as defined by the following claims.

## Claims

1. A solid electrolyte (12, 22a), comprising:
a lithium ion inorganic conductive layer (12a); and
an amorphous phase on a surface of the lithium ion inorganic conductive layer (12a),
wherein the amorphous phase comprises a laser irradiation product of the lithium ion inorganic conductive layer,
wherein the lithium ion inorganic conductive layer (12a) comprises at least one of a compound of Formula 1 and a compound of Formula 1a:
Formula 1 Li₇₋ₓM¹ₓLa₃₋ₐM²ₐZr_{2-b}M³_{b}O₁₂,
and
Formula 1a Li₇₋ₓLa₃₋ₐM²ₐZr_{2-b}M³_{b}O₁₂,
wherein, in Formula 1, M¹ comprises at least one of gallium and aluminum,
in Formulas 1 and 1a, M² comprises at least one calcium, strontium, cesium, and barium,
M³ comprises at least one of aluminum, tungsten, niobium, and tantalum, and
0≤x<3, 0≤a≤3, and 0≤b≤2.

2. The solid electrolyte (12, 22a) of claim 1, wherein the amorphous phase is in a form of an amorphous film (12b, 230) having a thickness of 5 nanometers to 5 micrometers;
preferably further comprising a semi-crystalline film (220) comprising a semi-crystalline phase, wherein the semi-crystalline film (220) is situated between the lithium ion inorganic conductive layer (12a) and the amorphous film (12b, 230);
preferably further comprising a crystalline phase situated between the semi-crystalline film (220) and the amorphous film (12b, 230);
preferably wherein the crystalline phase is in the form of a crystalline film (210, 215).

3. The solid electrolyte (12, 22a) of claims 1 or 2, wherein the amorphous phase is in a form of a patterned amorphous film, wherein the patterned amorphous film has a surface area of 200 to 500 percent greater than a surface area of the lithium ion inorganic conductive layer (12a) beneath the patterned amorphous film; and/or
wherein the solid electrolyte (12, 22a) further comprises at least one of a ceramic layer and a ceramic glass layer on an unpatterned portion of the surface of the lithium ion inorganic conductive layer (12a); and/or
wherein the patterned amorphous film has a shape comprising at least one of a plurality of perpendicular lines and a plurality of parallel lines, and wherein the perpendicular or parallel lines comprise lines having a line width of from 10 to 30 micrometers; and/or
wherein the solid electrolyte (12, 22a) further comprises a semi-crystalline film (220) comprising a semi-crystalline phase situated between the lithium ion inorganic conductive layer (12a) and the patterned amorphous film, wherein the semi-crystalline film (220) has a thickness less than a thickness of the amorphous film (12b, 230).

4. The solid electrolyte (12, 22a) of any of claims 1-3, wherein the lithium ion inorganic conductive layer (12a) comprises at least one of a garnet compound, an argyrodite compound, a lithium super ionic conductor, a sodium super ionic conductor, lithium nitride, lithium hydride, a compound having a perovskite structure, and a lithium halide; and/or
wherein the lithium ion inorganic conductive layer (12a) comprises at least one of:
a garnet ceramic of the formula Li₃₊ₓLa₃M₂O₁₂ wherein 0≤x≤5, and M is tellurium, niobium, or zirconium,
Li_{1+x+y}AlₓTi₂₋ₓSi_{y}P_{3-y}O₁₂ wherein 0<x<2 and 0≤y<3,
BaTiO₃,
Pb(Zr₁₋ₓTiₓ)O₃ wherein 0<x<1,
Pb₁₋ₓLaₓZr_{1-y}Ti_{y}O₃ wherein 0≤x<1 and 0≤y<1,
Pb(Mg_{1/3}Nb_{2/3})O₃-PbTiO₃,
Li₃PO₄,
LiₓTi_{y}(PO₄)₃ wherein 0<x<2 and 0<y<3,
LiₓAl_{y}Ti_{z}(PO₄)₃ wherein 0<x<2, 0<y<1, and 0<z<3,
Li_{1+x+y}(AlₐGa₁₋ₐ)ₓ(Ti_{b}Ge_{1-b})₂₋ₓSi_{y}P_{3-y}O₁₂ wherein 0≤x≤1, 0≤y≤1, 0≤a≤1, and 0≤b≤1,
LiₓLa_{y}TiO₃ wherein 0<x<2 and 0<y<3,
LiₓGe_{y}P_{z}S_{w} wherein 0<x<4, 0<y<1, 0<z<1, and 0<w<5,
LiₓN_{y} wherein 0<x<4 and 0<y<2,
a glass of the formula LiₓSi_{y}S_{z} glass wherein 0≤x<3, 0<y<2, and 0<z<4,
a glass of the formula LiₓP_{y}S_{z} glass wherein 0≤x<3, 0<y<3, and 0<z<7,
Li₃ₓLa_{2/3-x}TiO₃ wherein O≦x≦1/6,
Li_{1+y}Al_{y}Ti_{2-y}(PO₄)₃ wherein 0≦y≦1,
Li_{1+z}Al_{z}Ge_{2-z}(PO₄)₃ wherein 0≦z≦1,
Li₂O, LiF, LiOH, Li₂CO₃, LiAlO₂, a (Li₂O)ₐ-(Al₂O₃)_{b}-(SiO₂)_{c}-(P₂O₅)_{d}-(TiO₂)ₑ-(GeO₂)_{f} ceramic wherein 0≤a≤1, 0≤b≤1, 0≤c≤1, 0≤d≤1, 0≤e≤1, and 0≤f≤1, Li₇La₃Zr₂O₁₂, Li₁₀GeP₂S₁₂, Li_{3.25}Ge_{0.25}P_{0.75}S₄, Li₃PS₄, Li₆PS₅Br, Li₆PS₅Cl, Li₇PS₅, Li₆PS₅I, Li_{1.3}Al_{0.3}Ti_{1.7}(PO₄)₃, LiTi₂(PO₄)₃, LiGe₂(PO₄)₃, LiHf₂(PO₄)₃, LiZr₂(PO₄)₃, Li₂NH₂, Li₃(NH₂)₂I, LiBH₄, LiAIH₄, LiNH₂, Li_{0.34}La_{0.51}TiO_{2.94}, LiSr₂Ti₂NbO₉, Li_{0.06}La_{0.66}Ti_{0.93}Al_{0.03}O₃, Li_{0.34}Nd_{0.55}TiO₃, Li₂CdCl₄, Li₂MgCl₄, Li₂ZnI₄, and Li₂CdI₄;
preferably wherein a crystallinity of the inorganic lithium ion conductor layer increases in a direction away from the amorphous phase.

5. The solid electrolyte (12, 22a) of any of claims 1-4, further comprising a crystalline film (210, 215) situated between the lithium ion inorganic conductive layer (12a) and the amorphous phase,
wherein a dopant is the M1, M², and M³ of Formulas 1 and 1a, and
wherein a total content of the dopant in the amorphous phase is less than a total content of the dopant in the crystalline film (210, 215); and/or
wherein a dopant is the M1, M², and M³ of Formulas 1 and 1a, and
wherein a total content of the dopant in the amorphous phase is equal to or less than 1 mole percent, based on 100 mole percent of the amorphous phase; and/or
wherein the compound of Formula 1 is at least one of Li_{4.9}La_{2.5}Ca_{0.5}Zr_{1.7}Nb_{0.3}O₁₂, Li_{4.9}Ga_{0.5+δ}La₃Zr_{1.7}W_{0.3}O₁₂ wherein 0≤δ≤1.6, Li_{6.4}La₃Zr_{1.7}W_{0.3}O₁₂, Li₇La₃Zr_{1.5}W_{0.5}O₁₂, Li₇La_{2.75}Ca_{0.25}Zr_{1.75}Nb_{0.25}O₁₂, Li₇La₃Zr_{1.5}Nb_{0.5}O₁₂, Li₇La₃Zr_{1.5}Ta_{0.5}O₁₂, Li_{6.272}La₃Zr_{1.7}W_{0.3}O₁₂, and Li_{5.39}Ga_{0.5+δ}La₃Zr_{1.7}W_{0.3}O₁₂ wherein 0≤δ≤1.1,.

6. The solid electrolyte (12, 22a) of any of claims 1-5, wherein the lithium ion inorganic conductive layer (12a) is a crystalline film (210, 215) having a crystal grain boundary, and
wherein a thickness ratio of the lithium ion inorganic conductive layer (12a) to the amorphous film (12b, 230) is from 1:0.001 to 1:0.2; and/or
wherein ion conductivity at 60°C of the solid electrolyte (12, 22a) is in a range of 5×10⁻⁴ Siemens per centimeter or greater; and/or
wherein the solid electrolyte (12, 22a) has ionic conductivity at 25°C of 1×10⁻⁷ to 5×10⁻³ Siemens per centimeter; and/or
wherein the solid electrolyte (12, 22a) is a liquid-impermeable layer having a porosity of 30% or less; and/or
wherein a thickness of the solid electrolyte (12, 22a) is 1 to 300 micrometers.

7. The solid electrolyte (12, 22a) of any of claims 2-6, wherein the amorphous film (12b, 230) comprises, on a portion of the lithium ion inorganic conductive layer (12a):
a plurality of grooves that are spaced apart, and
a protrusion between the plurality of grooves;
preferably wherein a bottom of a groove (120) of the plurality of grooves (120) comprises a curved surface; and/or
wherein the grooves (120) of the plurality of grooves are periodically disposed.

8. A lithium battery comprising:
a negative electrode (10);
a positive electrode (11); and
the solid electrolyte (12, 22a) of any of claims 1-7.

9. The lithium battery of claim 8, wherein the amorphous phase of the solid electrolyte (12, 22a) is adjacent to the negative electrode (10); or
wherein the amorphous phase of the solid electrolyte (12, 22a) is adjacent to the positive electrode (11); and/or
wherein the negative electrode is a lithium metal negative electrode (20) comprising lithium metal or an alloy of lithium metal, and the lithium battery further comprises an interlayer (22b) between the lithium metal negative electrode (20) and the solid electrolyte (12, 22a), preferably wherein a thickness of the interlayer (22b) is 1 to 10 micrometers, and/or wherein the interlayer (22b) comprises at least one of polyethylene oxide, gold, aluminum oxide, lithium aluminate, zinc, silicon, and lithium phosphate.

10. The lithium battery of claims 8 or 9, wherein the negative electrode (10) is a lithium metal negative electrode (20) comprising lithium metal or a lithium metal alloy; and/or
wherein the lithium metal negative electrode (20) further comprises a protective layer; and/or
wherein an interfacial resistance between the lithium metal negative electrode (20) and the solid electrolyte (12, 22a) is 10 ohm cm² to 500 ohm cm².

11. A method of preparing a solid electrolyte (12, 22a), the method comprising:
providing a lithium ion inorganic conductive layer (12a); and
irradiating the lithium ion inorganic conductive layer (12a) with a laser beam to form an amorphous phase on a surface of the lithium ion inorganic conductive layer (12a) to prepare the solid electrolyte (12, 22a) of any of claims 1-7;
wherein the irradiating comprises irradiating with a laser beam having a laser beam power of 0.5 Watts to 15 Watts, wherein the laser beam has a wavelength of 300 nanometers to 3,000 nanometers, and wherein a diameter of the laser beam size is 10 micrometers to 10,000 micrometers.

12. The method of claim 11, wherein the irradiating comprises directing the laser beam to form a pattern on the lithium ion inorganic conductive layer (12a), wherein a surface area of the amorphous phase is 10% to 1000% of a surface area of the lithium ion inorganic conductive layer (12a) prior to irradiation; and/or
wherein the providing of the lithium ion inorganic conductive layer (12a) comprises:
pressing an inorganic lithium ion conductor powder to produce a film, and
heat-treating the film at a temperature of 700°C to 1,500°C to provide the lithium ion inorganic conductive layer (12a).

13. The solid electrolyte (12, 22a) of any of claims 1-7, wherein the lithium ion inorganic conductive layer (12a) comprises a lithium ion conductive garnet, and
the amorphous phase comprises an amorphous lithium-lanthanum-zirconium oxide.

14. The solid electrolyte (12, 22a) of claim 13, wherein less than 10 percent of a total area of a surface of the amorphous lithium-lanthanum-zirconium oxide is directly covered by lithium carbonate; and/or
wherein the lithium ion conductive layer (12a) comprises a crystalline garnet; and/or
wherein the solid electrolyte (12, 22a) is in a sheet form and the amorphous lithium-lanthanum-zirconium oxide covers at least 90 percent of a major surface of the solid electrolyte sheet; and/or
wherein, at an interface between the lithium ion conductive layer (12a) and the amorphous lithium-lanthanum-zirconium oxide, a crystallinity of the interface increases in a direction away from the amorphous lithium-lanthanum-zirconium oxide, preferably wherein the amorphous lithium-lanthanum-zirconium oxide in in the form of a layer having a depth of at least 50 nanometers before crystallinity of the interface is present.

## Patentansprüche

1. Festkörperelektrolyt (12, 22a), umfassend:
eine anorganische leitende Lithiumionenschicht (12a); und
eine amorphe Phase auf einer Oberfläche der anorganischen leitenden Lithiumionenschicht (12a),
wobei die amorphe Phase ein Laserbestrahlungsprodukt der anorganischen leitenden Lithiumionenschicht umfasst,
wobei die anorganische leitende Lithiumionenschicht (12a) mindestens eine von einer Verbindung von Formel 1 oder eine Verbindung von Formel 1a umfasst:
Formel 1 Li₇₋ₓM¹ₓLa₃₋ₐM²ₐZr_{2-b}M³_{b}O₁₂
und
Formel 1a Li₇₋ₓLa₃₋ₐM²ₐZr_{2-b}M³_{b}O₁₂,
wobei M¹ in Formel 1 mindestens eines von Gallium und Aluminium umfasst,
M² in Formel 1 und 1a mindestens ein Calcium, Strontium, Cäsium und Barium umfasst,
M³ mindestens eines von Aluminium, Wolfram, Niob und Tantal umfasst, und 0≤x<3, 0≤a≤3 und 0≤b≤2.

2. Festkörperelektrolyt (12, 22a) nach Anspruch 1, wobei die amorphe Phase in Form eines amorphen Films (12b, 230) ist, der eine Stärke von 5 Nanometer bis 5 Mikrometer aufweist,
vorzugsweise ferner umfassend einen halbkristallinen Film (220), umfassend eine halbkristalline Phase, wobei sich der halbkristalline Film (220) zwischen der anorganischen leitenden Lithiumionenschicht (12a) und dem amorphen Film (12b, 230) befindet,
vorzugsweise ferner umfassend eine kristalline Phase, die sich zwischen dem halbkristallinen Film (220) und dem amorphen Film (12b, 230) befindet,
wobei die kristalline Phase vorzugsweise in Form eines kristallinen Films (210, 215) ist.

3. Festkörperelektrolyt (12, 22a) nach Anspruch 1 oder 2, wobei die amorphe Phase in Form eines strukturierten amorphen Films ist, wobei der strukturierte amorphe Film eine Oberfläche aufweist, die 200 bis 500 Prozent größer ist als die Oberfläche der anorganischen leitenden Lithiumionenschicht (12a) unter dem strukturierten amorphen Film; und/oder
wobei der Festkörperelektrolyt (12, 22a) ferner mindestens eine von einer keramischen Schicht und einer keramischen Glasschicht auf einem unstrukturierten Abschnitt der Oberfläche der anorganischen leitenden Lithiumionenschicht (12a) umfasst, und/oder
wobei der strukturierte amorphe Film eine Form aufweist, umfassend mindestens eine von einer Vielzahl von senkrechten Linien und einer Vielzahl von parallelen Linien, und wobei die senkrechten oder parallelen Linien, Linien mit eine Linienbreite von 10 bis 30 Mikrometern aufweisen; und/oder
wobei der Festkörperelektrolyt (12, 22a) ferner einen halbkristallinen Film (220) umfasst, umfassend eine halbkristalline Phase, die sich zwischen der anorganischen leitenden Lithiumionenschicht (12a) und dem strukturierten amorphen Film befindet, wobei der halbkristalline Film (220) eine geringere Stärke als die Stärke des amorphen Films (12b, 230) aufweist.

4. Festkörperelektrolyt (12, 22a) nach einem der Ansprüche 1-3, wobei die anorganische leitende Lithiumionenschicht (12a) mindestens eines von einer Granatverbindung, einer Argyroditverbindung, einem Lithium-Superionenleiter, einem Natrium-Superionenleiter, Lithiumnitrid, Lithiumhydrid, einer Verbindung, die eine Perowskitstruktur aufweist, und einem Lithiumhalogenid umfasst, und/oder
wobei die anorganische leitende Lithiumionenschicht (12a) mindestens eines von Folgenden umfasst:
eine Granatkeramik der Formel Li₃₊ₓLa₃M₂O₁₂, wobei 0≤x≤5 und M Tellur, Niob oder Zirkonium ist,
Li_{1+x+y}AlₓTi₂₋ₓSi_{y}P_{3-y}O₁₂ wobei 0<x<2 and 0≤y<3,
BaTiO₃,
Pb(Zr₁₋ₓTix)O₃ wobei 0<x<1,
Pb_{1-xL}a_{xZ}r_{1-y}Ti_{y}O₃ wobei 0≤x<1 und 0≤y<1,
Pb(Mg_{1/3}Nb_{2/3})O₃-PbTiO₃,
Li₃PO₄,
LiₓTi_{y}(PO₄)₃ wobei 0<x<2 and 0<y<3,
LiₓAl_{y}Ti_{z}(PO₄)₃ wobei 0<x<2, 0<y<1 and 0<z<3,
Li_{1+x+y}(AlₐGa₁₋ₐ)ₓ(Ti_{b}Ge_{1-b})₂₋ₓSi_{y}P_{3-y}O₁₂ wobei 0≤x≤1, 0≤y≤1, 0≤a≤1 und 0≤b≤1,
LiₓLa_{y}TiO₃ wobei 0<x<2 und 0<y<3,
LiₓGe_{y}P_{z}S_{w} wobei 0<x<4, 0<y<1, 0<z<1 und 0<w<5,
LiₓN_{y} wobei 0<x<4 und 0<y<2,
ein Glas der Formel LiₓSi_{y}S_{z} Glas, wobei 0≤x<3, 0<y<2 und 0<z<4,
ein Glas der Formel LiₓP_{y}S_{z} Glas, wobei 0≤x<3, 0<y<3 und 0<z<7,
Li₃ₓLa_{2/3-x}TiO₃ wobei 0≦x≦1/6,
Li_{1+y}Al_{y}Ti_{2-y}(PO₄)₃ wobei 0≦y≦1,
Li_{1+z}Al_{z}Ge_{2-z}(PO₄)₃ wobei 0≦z≦1,
Li₂O, LiF, LiOH, Li₂CO₃, LiAlO₂, a (Li₂O)ₐ-(Al₂O₃)_{b}-(SiO₂)_{c}-(P₂O₅)_{d}-(TiO₂)ₑ- (GeO₂)_{f} Keramik,
wobei 0≤a≤1, 0≤b≤1, 0≤c≤1, 0≤d≤1, 0≤e≤1 und 0≤f≤1, Li₇La₃Zr₂O₁₂, Li₁₀GeP₂S₁₂, Li_{3,25}Ge_{0,25}P_{0,75}S₄, Li₃PS₄, Li₆PS₅Br, Li₆PS₅Cl, Li₇PS₅, Li₆PS₅l, Li_{1,3}Al_{0,3}Ti_{1,7}(PO₄)₃, LiTi₂(PO₄)₃, LiGe₂(PO₄)₃, LiHf₂(PO₄)₃, LiZr₂(PO₄)₃, Li₂NH₂, Li₃(NH₂)₂l, LiBH₄, LiAIH₄, LiNH₂, Li_{0,34}La_{0,5},TiO_{2,94}, LiSr₂Ti₂NbO₉, Li_{0,06}La_{0,66}Ti_{0,93}Al_{0,03}O₃, Li_{0,34}Nd_{0,55}TiO₃, Li₂CdCl₄, Li₂MgCl₄,
Li₂Znl₄ und Li₂Cdl₄;
wobei die Kristallinität der anorganischen leitenden Lithiumionenschicht vorzugsweise in einer von der amorphen Phase wegführenden Richtung zunimmt.

5. Festkörperelektrolyt (12, 22a) nach einem der Ansprüche 1-4, ferner umfassend einen kristallinen Film (210, 215), der sich zwischen der anorganischen leitenden Lithiumionenschicht (12a) und der amorphen Phase befindet,
wobei ein Dotierstoff M¹, M² und M³ von Formel 1 und 1a ist, und
wobei ein Gesamtgehalt des Dotierstoffs in der amorphen Phase geringer ist als der Gesamtgehalt des Dotierstoffs in dem kristallinen Film (210, 215); und/oder
wobei ein Dotierstoff M¹, M² und M³ von Formel 1 und 1a ist, und
wobei der Gesamtgehalt des Dotierstoffs in der amorphen Phase gleich wie oder weniger als 1 Molprozent, bezogen auf 100 Molprozent der amorphen Phase, ist; und/oder
wobei die Verbindung von Formel 1 mindestens eine von Li_{4,9}La_{2,5}Ca_{0,5}Zr_{1,7}Nb_{0,3}O₁₂, Li_{4,9}Ga_{0,5}+_{δ}La₃Zr_{1,7}W_{0,3}O₁₂ ist, wobei 0≤δ≤1,6,
Li_{6,4}La₃Zr_{1,7}W_{0,3}O₁₂, Li₇La₃Zr_{1,5}W_{0,5}O₁₂, Li₇La_{2,75}Ca_{0,25}Zr_{1,75}Nb_{0,25}O₁₂,
Li₇La₃Zr_{1,5}Nb_{0,5}O₁₂, Li₇La₃Zr_{1,5}Ta_{0,5}O₁₂, Li_{6,272}La₃Zr_{1,7}W_{0,3}O₁₂ und
Li_{5,39}Ga_{0,5+δ}La₃Zr_{1,7}W_{0,3}O₁₂ wobei 0≤8≤1,1.

6. Festkörperelektrolyt (12, 22a) nach einem der Ansprüche 1-5, wobei die anorganische leitende Lithiumionenschicht (12a) ein kristalliner Film (210, 215) ist, der eine Kristallkorngrenze aufweist, und
wobei ein Stärkenverhältnis der anorganischen leitenden Lithiumionenschicht (12a) zu dem amorphen Film (12b, 230) 1:0,001 bis 1:0,2 ist; und/oder
wobei eine Ionenleitfähigkeit des Festkörperelektrolyten (12, 22a) bei 60 °C in einem Bereich von 5×10⁻⁴ Siemens pro Zentimeter oder größer ist; und/oder
wobei der Festkörperelektrolyt (12, 22a) eine Ionenleitfähigkeit bei 25 °C von 1×10⁻⁷ bis 5×10⁻³ Siemens pro Zentimeter aufweist, und/oder
wobei der Festkörperelektrolyt (12, 22a) eine flüssigkeitsundurchlässige Schicht ist, die eine Porosität von 30 % oder weniger aufweist, und/oder
wobei eine Stärke des Festkörperelektrolyten (12, 22a) 1 bis 300 Mikrometer ist.

7. Festkörperelektrolyt (12, 22a) nach einem der Ansprüche 2-6, wobei der amorphe Film (12b, 230) auf einem Abschnitt der anorganischen leitenden Lithiumionenschicht (12a) Folgendes umfasst:
eine Vielzahl von Rillen, die voneinander beabstandet sind, und
einen Vorsprung zwischen der Vielzahl von Rillen,
wobei vorzugsweise ein Boden einer Rille (120) der Vielzahl von Rillen (120) eine gekrümmte Oberfläche umfasst, und/oder
wobei die Rillen (120) der Vielzahl von Rillen regelmäßig angeordnet sind.

8. Lithiumbatterie, umfassend:
eine negative Elektrode (10);
eine positive Elektrode (11); und
den Festkörperelektrolyten (12, 22a) nach einem der Ansprüche 1-7.

9. Lithiumbatterie nach Anspruch 8, wobei die amorphe Phase des Festkörperelektrolyten (12, 22a) benachbart zu der negativen Elektrode (10) ist; oder
wobei die amorphe Phase des Festkörperelektrolyten (12, 22a) benachbart zu der positiven Elektrode (11) ist; und/oder
wobei die negative Elektrode eine negative Lithiummetall-Elektrode (20) ist, umfassend Lithiummetall oder eine Lithiummetall-Legierung, und die Lithiumbatterie ferner eine Zwischenschicht (22b) zwischen der negativen Lithiummetall-Elektrode (20) und dem Festkörperelektrolyt (12, 22a) umfasst, wobei vorzugsweise eine Stärke der Zwischenschicht (22b) 1 bis 10 Mikrometer ist und/oder wobei die Zwischenschicht (22b) mindestens eines von Polyethylenoxid, Gold, Aluminiumoxid, Lithiumaluminat, Zink, Silicium und Lithiumphosphat umfasst.

10. Lithiumbatterie nach Anspruch 8 oder 9, wobei die negative Elektrode (10) eine negative Lithiummetall-Elektrode (20) ist, umfassend Lithiummetall oder eine Lithiummetall-Legierung, und/oder
wobei die negative Lithiummetall-Elektrode (20) ferner eine Schutzschicht umfasst, und/oder wobei ein Grenzflächenwiderstand zwischen der negativen Lithiummetall-Elektrode (20) und dem Festkörperelektrolyten (12, 22a) 10 Ohm cm² bis 500 Ohm cm² ist.

11. Verfahren zum Herstellen eines Festkörperelektrolyten (12, 22a), das Verfahren umfassend:
Bereitstellen einer anorganischen leitenden Lithiumionenschicht (12a); und
Bestrahlen der anorganischen leitenden Lithiumionenschicht (12a) mit einem Laserstrahl, um eine amorphe Phase auf einer Oberfläche der anorganischen leitenden Lithiumionenschicht (12a) zu bilden, um den Festkörperelektrolyten (12, 22a) nach einem der Ansprüche 1-7 herzustellen;
wobei das Bestrahlen ein Bestrahlen mit einem Laserstrahl umfasst, der eine Laserstrahlleistung von 0,5 Watt bis 15 Watt aufweist, wobei der Laserstrahl eine Wellenlänge von 300 Nanometern bis 3.000 Nanometern aufweist und wobei ein Durchmesser der Laserstrahlgröße 10 Mikrometer bis 10.000 Mikrometer ist.

12. Verfahren nach Anspruch 11, wobei das Bestrahlen ein Richten des Laserstrahls umfasst, um eine Strukturierung auf der anorganischen leitenden Lithiumionenschicht (12a) zu bilden, wobei eine Oberfläche der amorphen Phase 10 % bis 1000 % einer Oberfläche der anorganischen leitenden Lithiumionenschicht (12a) vor einer Bestrahlung ist; und/oder
wobei das Bereitstellen der anorganischen leitenden Lithiumionenschicht (12a) Folgendes umfasst:
Pressen eines anorganischen Lithiumionen-Leiterpulvers, um einen Film zu erzeugen, und
Wärmebehandeln des Films bei einer Temperatur von 700 °C bis 1500 °C, um die anorganische leitende Lithiumionenschicht (12a) bereitzustellen.

13. Festkörperelektrolyt (12, 22a) nach einem der Ansprüche 1-7, wobei anorganische leitende Lithiumionenschicht (12a) einen Lithiumionen-leitenden Granat umfasst, und
die amorphe Phase ein amorphes Lithium-Lanthan-Zirkoniumoxid umfasst.

14. Festkörperelektrolyt (12, 22a) nach Anspruch 13, wobei weniger als 10 %
Prozent der Gesamtfläche des amorphen Lithium-Lanthan-Zirkoniumoxids direkt von Lithiumcarbonat bedeckt ist; und/oder
wobei die leitende Lithiumionenschicht (12a) einen kristallinen Granat umfasst, und/oder wobei der Festkörperelektrolyt (12, 22a) blattförmig ist und das amorphe Lithium-Lanthan-Zirkoniumoxid mindestens 90 Prozent einer Hauptoberfläche der Festkörperelektrolytfolie bedeckt; und/oder
wobei an einer Grenzfläche zwischen der leitenden Lithiumionenschicht (12a) und dem amorphen Lithium-Lanthan-Zirkoniumoxid eine Kristallinität der Grenzfläche in einer Richtung weg von dem amorphen Lithium-Lanthan-Zirkoniumoxid zunimmt, wobei das amorphe Lithium-Lanthan-Zirkoniumoxid vorzugsweise in Form einer Schicht mit einer Tiefe von mindestens 50 Nanometern ist, bevor eine Kristallinität der Grenzfläche vorhanden ist.

## Revendications

1. Electrolyte solide (12, 22a), comprenant :
une couche conductrice inorganique d'ions de lithium (12a) ; et
une phase amorphe sur une surface de la couche conductrice inorganique d'ions de lithium (12a),
où la phase amorphe comprend un produit d'irradiation par laser de la couche conductrice inorganique d'ions de lithium,
où la couche conductrice inorganique d'ions de lithium (12a) comprend au moins l'un d'un composé de Formule 1 et d'un composé de Formule 1a :
Formule 1 Li₇₋ₓM¹ₓLa₃₋ₐM²ₐZr_{2-b}M³_{b}O₁₂, et
Formule 1a Li₇₋ₓLa₃₋ₐM²ₐZr_{2-b}M³_{b}O₁₂,
où, dans la Formule 1, M¹ comprend au moins l'un de gallium et aluminium,
dans les Formules 1 et 1a, M² comprend au moins l'un de : calcium, strontium, césium et baryum,
M³ comprend au moins l'un de : aluminium, tungstène, niobium et tantale, et
0≤x<3, 0≤a≤3, et 0≤b<2.

2. Electrolyte solide (12, 22a) selon la revendication 1, où la phase amorphe a la forme d'un film amorphe (12b, 230) ayant une épaisseur de 5 nanomètres à 5 micromètres ;
comprenant en outre de préférence un film semi-cristallin (220) comprenant une phase semi-cristalline, où le film semi-cristallin (220) est situé entre la couche conductrice inorganique d'ions de lithium (12a) et le film amorphe (12b, 230) ;
comprenant en outre de préférence une phase cristalline située entre le film semi-cristallin (220) et le film amorphe (12b, 230) ;
de préférence où la phase cristalline a la forme d'un film cristallin (210, 215).

3. Electrolyte solide (12, 22a) selon la revendication 1 ou 2, où la phase amorphe a la forme d'un film amorphe à motif, où le film amorphe à motif a une superficie de 200 à 500 pour cent plus grande qu'une superficie de la couche conductrice inorganique d'ions de lithium (12a) sous le film amorphe à motif ; et/ou
où l'électrolyte solide (12, 22a) comprend en outre au moins l'une d'une couche de céramique et d'une couche de vitrocéramique sur une partie sans motif de la surface de la couche conductrice inorganique d'ions de lithium (12a) ; et/ou
où le film amorphe à motif a une forme comprenant au moins l'une d'une pluralité de lignes perpendiculaires et d'une pluralité de lignes parallèles, et où les lignes perpendiculaires ou parallèles comprennent des lignes ayant une largeur de ligne de 10 à 30 micromètres ; et/ou
où l'électrolyte solide (12, 22a) comprend en outre un film semi-cristallin (220) comprenant une phase semi-cristalline située entre la couche conductrice inorganique d'ions de lithium (12a) et le film amorphe à motif, où le film semi-cristallin (220) a une épaisseur inférieure à une épaisseur du film amorphe (12b, 230).

4. Electrolyte solide (12, 22a) selon l'une quelconque des revendications 1-3, où la couche conductrice inorganique d'ions de lithium (12a) comprend au moins l'un de : un composé de grenat, un composé d'argyrodite, un conducteur superionique de lithium, un conducteur superionique de sodium, nitrure de lithium, hydrure de lithium, un composé ayant une structure de pérovskite, et un halogénure de lithium ; et/ou
où la couche conductrice inorganique d'ions de lithium (12a) comprend au moins l'un de :
une céramique de grenat de la formule Li₃₊ₓLa₃M₂O₁₂ où 0≤x≤5, et M est tellurium, niobium, ou zirconium,
Li_{1+x+y}AlₓTi₂₋ₓSi_{y}P_{3-y}O₁₂ où 0<x<2 et 0≤y<3,
BaTiO₃,
Pb(Zr₁₋ₓTiₓ)O₃ où 0<x<1,
Pb₁₋ₓLaₓZr_{1-y}Ti_{y}O₃ où 0≤x<1 et 0≤y<1,
Pb(Mg_{1/3}Nb_{2/3})O₃-PbTiO₃,
Li₃PO₄,
LiₓTi_{y}(PO₄)₃ où 0<x<2 et 0<y<3,
LiₓAl_{y}Ti_{z}(PO₄)₃ où 0<x<2, 0<y<1, et 0<z<3,
Li_{1+x+y}(AlₐGa₁₋ₐ)ₓ(Ti_{b}Ge_{1-b})₂₋ₓSi_{y}P₃-_{y}O₁₂ où 0≤x≤1, 0≤y≤1, 0≤a≤1, et 0≤b≤1,
LiₓLa_{y}TiO₃ où 0<x<2 et 0<y<3,
LiₓGe_{y}P_{z}S_{w} où 0<x<4, 0<y<1, 0<z<1, et 0<w<5,
LiₓN_{y} où 0<x<4 et 0<y<2,
un verre de la formule LiₓSi_{y}S_{z} verre où 0≤x<3, 0<y<2, et 0<z<4,
un verre de la formule LiₓP_{y}S_{z} verre où 0≤x<3, 0<y<3, et 0<z<7,
Li₃ₓLa_{2/3-x}TiO₃ où 0≦x≦1/6,
Li_{1+y}Al_{y}Ti_{2-y}(PO₄)₃ où 0≦y≦1,
Li_{1+z}Al_{z}Ge_{2-z}(PO₄)₃ où 0≦z≦1,
Li₂O, LiF, LiOH, Li₂CO₃, LiAIO₂, une céramique (Li₂O)ₐ-(Al₂O₃)_{b}-(SiO₂)_{c}-(P₂O₅)_{d}-(TiO₂)ₑ- (GeO₂)_{f} où 0≤a≤1, 0≤b≤1, 0≤c≤1, 0≤d≤1, 0≤e≤1, et 0≤f≤1, Li₇La₃Zr₂O₁₂, Li₁₀GeP₂S₁₂, Li_{3.25}Ge_{0.25}P_{0.75}S₄, Li₃PS₄, Li₆PS₅Br, Li₆PS₅Cl, Li₇PS₅, Li₆PS₅I, Li_{1.3}Al_{0.3}Ti_{1.7}(PO₄)₃, LiTi₂(PO₄)₃, LiGe₂(PO₄)₃, LiHf₂(PO₄)₃, LiZr₂(PO₄)₃, Li₂NH₂, Li₃(NH₂)₂I, LiBH₄, LiAlH₄, LiNH₂, Li_{0.34}La_{0.51}TiO_{2.94}, LiSr₂Ti₂NbO₉, Li_{0.06}La_{0.66}Ti_{0.93}Al_{0.03}O₃, Li_{0.34}Nd_{0.55}TiO₃, Li₂CdCl₄, Li₂MgCl₄, Li₂ZnI₄, et Li₂CdI₄ ;
de préférence où une cristallinité de la couche conductrice d'ions de lithium inorganique augmente dans une direction s'éloignant de la phase amorphe.

5. Electrolyte solide (12, 22a) selon l'une quelconque des revendications 1-4, comprenant en outre un film cristallin (210, 215) situé entre la couche conductrice inorganique d'ions de lithium (12a) et la phase amorphe,
où un dopant est le M¹, M², et M³ des Formules 1 et 1a, et
où une teneur totale en dopant de la phase amorphe est inférieure à une teneur totale en dopant du film cristallin (210, 215) ; et/ou
où un dopant est le M¹, M², et M³ des Formules 1 et 1a, et
où une teneur totale en dopant de la phase amorphe est égale ou inférieure à 1 mole pour cent, sur la base de 100 moles pour cent de la phase amorphe ; et/ou
où le composé de Formule 1 est au moins l'un de Li_{4.9}La_{2.5}Ca_{0.5}Zr_{1.7}Nb_{0.3}O₁₂, Li_{4.9}Ga_{0.5+δ}La₃Zr_{1.7}W_{0.3}O₁₂ où 0≤δ≤1.6, Li_{6.4}La₃Zr_{1.7}W_{0.3}O₁₂, Li₇La₃Zr_{1.5}W_{0.5}O₁₂, Li₇La_{2.75}Ca_{0.25}Zr_{1.75}Nb_{0.25}O₁₂, Li₇La₃Zr_{1.5}Nb_{0.5}O₁₂, Li₇La₃Zr_{1.5}Ta_{0.5}O₁₂, Li_{6.272}La₃Zr_{1.7}W_{0.3}O₁₂, et Li_{5.39}Ga_{0.5+δ}La₃Zr_{1.7}W_{0.3}O₁₂ où 0≤δ≤1.1,.

6. Electrolyte solide (12, 22a) selon l'une quelconque des revendications 1-5, où la couche conductrice inorganique d'ions de lithium (12a) est un film cristallin (210, 215) ayant une limite de grain cristallin, et
où le rapport d'épaisseur de la couche conductrice inorganique d'ions de lithium (12a) au film amorphe (12b, 230) est de 1:0,001 à 1:0,2 ; et/ou
où la conductivité ionique à 60°C de l'électrolyte solide (12, 22a) est dans une gamme de 5×10⁻⁴ Siemens par centimètre ou supérieure ; et/ou
où l'électrolyte solide (12, 22a) a une conductivité ionique à 25°C de 1×10⁻⁷ à 5×10⁻³ Siemens par centimètre ; et/ou
où l'électrolyte solide (12, 22a) est une couche imperméable aux liquides ayant une porosité de 30% ou moins ; et/ou
où une épaisseur de l'électrolyte solide (12, 22a) est de 1 à 300 micromètres.

7. Electrolyte solide (12, 22a) selon l'une quelconque des revendications 2-6, où le film amorphe (12b, 230) comprend, sur une partie de la couche conductrice inorganique d'ions de lithium (12a) :
une pluralité de rainures qui sont espacées, et
une saillie entre la pluralité de rainures ;
de préférence où un fond d'une rainure (120) de la pluralité de rainures (120) comprend une surface incurvée ; et/ou
où les rainures (120) de la pluralité de rainures sont disposées de manière périodique.

8. Batterie au lithium comprenant :
une électrode négative (10) ;
une électrode positive (11) ; et
l'électrolyte solide (12, 22a) selon l'une quelconque des revendications 1-7.

9. Batterie au lithium selon la revendication 8, où la phase amorphe de l'électrolyte solide (12, 22a) est adjacente à l'électrode négative (10) ; ou
où la phase amorphe de l'électrolyte solide (12, 22a) est adjacente à l'électrode positive (11) ; et/ou
où l'électrode négative est une électrode négative au métal lithium (20) comprenant du métal lithium ou un alliage de métal lithium, et la batterie au lithium comprend en outre une couche intermédiaire (22b) entre l'électrode négative au métal lithium (20) et l'électrolyte solide (12, 22a), de préférence où une épaisseur de la couche intermédiaire (22b) est de 1 à 10 micromètres, et/ou où la couche intermédiaire (22b) comprend au moins l'un de : polyéthylène oxyde, or, oxyde d'aluminium, aluminate de lithium, zinc, silicium et phosphate de lithium.

10. Batterie au lithium selon la revendication 8 ou 9, où l'électrode négative (10) est une électrode négative au métal lithium (20) comprenant du métal lithium ou un alliage de métal lithium ; et/ou
où l'électrode négative au métal lithium (20) comprend en outre une couche protectrice ; et/ou
où une résistance interfaciale entre l'électrode négative au métal lithium (20) et l'électrolyte solide (12, 22a) est de 10 ohm cm² à 500 ohm cm².

11. Procédé de préparation d'un électrolyte solide (12, 22a), le procédé comprenant :
la fourniture d'une couche conductrice inorganique d'ions de lithium (12a) ; et
l'irradiation de la couche conductrice inorganique d'ions de lithium (12a) avec un rayon laser pour former une phase amorphe sur une surface de la couche conductrice inorganique d'ions de lithium (12a) pour préparer l'électrolyte solide (12, 22a) selon l'une quelconque des revendications 1-7 ;
où l'irradiation comprend l'irradiation avec un rayon laser ayant une puissance de rayon laser de 0,5 Watt à 15 Watts, où le rayon laser a une longueur d'onde de 300 nanomètres à 3 000 nanomètres, et où un diamètre du rayon laser est de 10 micromètres à 10 000 micromètres.

12. Procédé selon la revendication 11, où l'irradiation comprend l'orientation du rayon laser pour former un motif sur la couche conductrice inorganique d'ions de lithium (12a), où une superficie de la phase amorphe est de 10% à 1000% d'une superficie de la couche conductrice inorganique d'ions de lithium (12a) avant l'irradiation ; et/ou
où la fourniture de la couche conductrice inorganique d'ions de lithium (12a) comprend :
la compression d'une poudre conductrice inorganique d'ions de lithium pour produire un film, et
le traitement thermique du film à une température de 700°C à 1 500°C pour fournir la couche conductrice inorganique d'ions de lithium (12a).

13. Electrolyte solide (12, 22a) selon l'une quelconque des revendications 1-7, où la couche conductrice inorganique d'ions de lithium (12a) comprend un grenat conducteur d'ions de lithium, et
la phase amorphe comprend un oxyde de lithium-lanthane-zirconium amorphe.

14. Electrolyte solide (12, 22a) selon la revendication 13, où moins de 10 pour cent d'une superficie totale de l'oxyde amorphe de lithium-lanthane-zirconium sont directement couverts par du carbonate de lithium ; et/ou
où la couche conductrice d'ions de lithium (12a) comprend un grenat cristallin ; et/ou
où l'électrolyte solide (12, 22a) a la forme d'une feuille et l'oxyde amorphe de lithium-lanthane-zirconium couvre au moins 90 pour cent d'une grande surface de la feuille d'électrolyte solide ; et/ou
où, à une interface entre la couche conductrice d'ions de lithium (12a) et l'oxyde amorphe de lithium-lanthane-zirconium, une cristallinité de l'interface augmente dans une direction s'éloignant de l'oxyde amorphe de lithium-lanthane-zirconium, de préférence où l'oxyde amorphe de lithium-lanthane-zirconium a la forme d'une couche ayant une profondeur d'au moins 50 nanomètres avant que la cristallinité de l'interface soit présente.
